# EUROPÄISCHE PATENTSCHRIFT

(11) **EP 3 108 294 B1**
(45) Veröffentlichungstag und Bekanntmachung des Hinweises auf die Patenterteilung: **02.05.2018**
(21) Anmeldenummer: 15706141.7
(22) Anmeldetag: 18.02.2015
(51) Int. Cl.: G02B 27/64

(54) **POSITIONIERVORRICHTUNG FÜR EINEN BILDSTABILISATOR**
POSITIONING DEVICE FOR AN IMAGE STABILIZER
DISPOSITIF DE POSITIONNEMENT DESTINÉ À UN STABILISATEUR D'IMAGE

(30) Priorität: 20.02.2014 CH 231142014
(43) Veröffentlichungstag der Anmeldung: 28.12.2016
(73) Patentinhaber: MINISWYS SA, 2503 Biel (CH)
(72) Erfinder: SIEGRIST, Martin, 3005 Sern (CH); MEYER, Jean-Michel, 2605 Sonceboz-Sombevai (CH)
(74) Vertreter: Frei Patent Attorneys
(86) Internationale Anmeldenummer: PCT/CH2015/000020
(87) Internationale Veröffentlichungsnummer: WO 2015/123787

(56) Entgegenhaltungen:
- US-A1- 2006 227 437
- US-A1- 2009 303 595
- US-A1- 2010 123 788
- US-A1- 2012 229 901

## Beschreibung

Die Erfindung bezieht sich auf das Gebiet der Mikro-Positioniereinheiten und insbesondere auf eine Positioniervorrichtung für einen Bildstabilisator gemäss dem Oberbegriff des Patentanspruches 1.

EP 1 795 9A4 A1 offenbart eine Positioniervorrichtung für eine Linse in einem optischen Bildstabilisator, bei welcher ein Linsenhalter zwei im rechten Winkel zueinander von der Linse weg führende Arme mit Permanentmagneten aufweist. Jeder dieser Arme kann damit und mittels einer Spule in eine Richtung parallel zur optischen Achse der Linse verschoben werden. Der Linsenhalter ist mit einer ersten Achse an einem Zwischenelement drehbar montiert, und das Zwischenelement wiederum um eine zweite Achse, die normal zur eisten Achse verläuft, an einer Basis drehbar montiert.

US 2008/0198462 zeigt einen optischen Bildstabilisator, ebenfalls mit zwei Antrieben, jeweils mit einem Permanentmagneten und einer Spule, womit ein Kameramodul mit Linse und Bildaufnehmer positionierbar ist. Das Kameramodul ist um einen Punkt drehbar aufgehängt, und kann durch die Antriebe, welche in eine Richtung parallel zur optischen Achse wirken und an zwei anderen Punkten des Kameramoduls angreifen, um zwei Achsen gekippt werden.

Es ist Aufgabe der Erfindung, eine Positioniervorrichtung für einen Bildstabilisator der eingangs genannten Art zu schaffen, welche eine Alternative zu den bekannten Vorrichtungen realisiert.

Eine weitere Aufgabe ist, eine Positioniervorrichtung für einen Bildstabilisator zu schaffen, welche einen geringeren Energieverbrauch aufweist.

Eine weitere Aufgabe ist, eine Positioniervorrichtung für einen Bildstabilisator zu schaffen, welche eine höhere mechanische Stabilität aufweist.

Eine weitere Aufgabe ist, eine Positioniervorrichtung für einen Bildstabilisator zu schaffen, welche eine höhere Bandbreite der Bildstabilisierung aufweist, also höhere Frequenzen von Störungen kompensieren kann.

Eine weitere Aufgabe ist, eine Positioniervorrichtung für einen Bildstabilisator zu schaffen, welche eine Alternative zu bestehenden Vorrichtungen bietet.

Mindestens eine dieser Aufgaben wird zumindest teilweise durch eine Positioniervorrichtung gemäss mindestens einem der Ansprüche gelöst.

Die Positioniervorrichtung für einen Bildstabilisator zur kontrollierten Bewegung eines Trägers bezüglich einer Basis, weist auf:
- ein erstes Koppelelement, welches, mit einer ersten Aufhängung bezüglich der Basis beweglich montiert ist und mit einem ersten Antrieb bewegbar ist
- ein zweites Koppelelement, welches mit einer zweiten Aufhängung bezüglich der Basis beweglich montiert ist und mit einem zweiten Antrieb bewegbar ist,
- eine erste Übertragungseinheit, mit welcher eine Bewegung des ersten Koppelelements an den Träger übertragbar ist,
- eine zweite Übertragungseinheit. mit welcher eine Bewegung des zweiten Koppelelements an den Träger übertragbar ist,
- wobei der erste Antrieb und der zweite Antrieb Linearantriebe sind und das erste Koppelelement und das zweite Koppelelement jeweils eine Bewegbarkeit mit im wesentlichen genau einem translatorischen Freiheitsgrad (bezüglich der Basis) aufweisen.

Indem die Bewegungen der Antriebe und der Koppelelemente auf lineare Bewegungen beschränki sind, können die Aufhängungen und Übertragungseinheiten stabiler und mit grösseren Federkonstanten (also mit härteren Federn) als bei bekannten Positioniervorrichtungen mit gleicher Anzahl Freiheitsgrade realisiert werden. Damit werden Eigenfrequenzen des Systems höher, und damit wiederum ist es möglich, Bewegungen mit höheren Störungsfrequenzen zu kompensieren.

In mindestens einer Ausführungsform sind mindestens die erste Aufhängung und/oder die zweite Aufhängung durch eine Aufhängung mit mindestens zwei flachen Federelementen realisiert, welche das jeweilige Koppelelement mit der Basis verbinden. Damit ist es möglich, eine Aufhängung zu realisieren, welche in einer Richtung - insbesondere innerhalb einer Ebene des flachen Federelementes - eine hohe Steifheit aufweist, und bei Bewegungen senkrecht zu dieser Ebene eine niedrige Steifheit. Die flachen Federelemente sind beispielsweise Federblätter.

In mindestens einer Ausführungstorm sind mindestens der erste Antrieb und der zweite Antrieb piezoelektrische Linear-Antriebe, insbesondere solche, bei welchen ein flacher Resonator sich stiromgabelartig mit zwei Armen parallel zu einer Ebene eines aktiven Elements erstreckt. Darin ist der Resonator durch ein elektrisch gespeistes Piezoelement in Schwingung versetzbar, wobei Kontaktbereiche des Resonators durch eine oszillierende Bewegung ein passives Element des Antriebs bezüglich des aktiven Elements antreiben.

Indem derart geartete Antriebe eingesetzt werden - im Gegensatz zu Tauchspulenantrieben ... können höhere Antriebskräfte aufgebracht werden, was ebenfalls die Verwendung härterer Federn und die bereits beschriebene Erhöhung der Eigenfrequenzen begünstigt.

In mindestens einer Ausführungsform weist mindestens einer der Antriebe einen aktiven Antriebsteil und einen passiven, angetriebenen Teil auf. Der Antrieb ist insbesondere ein piezoelektrischer Antrieb, bei welchem ein Resonator durch ein elektrisch gespeistes Piezoelement in Schwingung versetzbar ist, wobei Kontaktbereiche des Resonators durch eine oszillierende Bewegung den passiven Teil des Antriebs bezüglich des Antriebsteils antreiben. Damit kann eine sehr kleine und präzis steuerbare Aufhängung geschaffen werden. Eine Speisefrequenz der Piezomotoren und damit eine Schwingfrequenz der Resonatoren und Kontaktbereiche beträgt beispielsweise zwischen 450 und 500 kHz.

Es kann der Antriebsteil eine flache Form aufweisen, wodurch sich die Baugrösse sehr klein gestalten lässt. Vorzugsweise ist zudem der passive Teil am Trägerelement befestigt. Die Ausdehnung des flachen Antriebsteils in der Ebene seiner grössten Ausdehnung ist vorzugsweise mindestens drei bis fünf mal grösser als in einer Richtung senkrecht zu dieser Ebene. Die Positioniervorrichtung ist vorzugsweise in jeder Richtung kleiner als 20 mm, vorzugsweise in jeder Richtung kleiner als 10 mm.

In mindestens einer Ausführungsform ist mindestens einer der Antriebe wie ein piezoelektrischer (Linear)-Antrieb aufgebaut, bei welchem ein flacher Resonator sich stimmgabelartig mit zwei Armen parallel zu Ebene des Antriebsteils erstreckt, der Resonator durch ein elektrisch gespeistes Piezoelement in Schwingung versetzbar ist, wobei Kontaktbereiche des Resonators durch eine oszillierende Bewegung den passiven Teil des Antriebs bezüglich des Antriebsteils antreiben. Der passive Teil macht dabei nicht exakt eine lineare Bewegung, obwohl der Antriebsteil für eine solche geeignet wäre, sondern bewegt sich auf einer Kreisbahn um die Trägerachse.

Der flache Resonator liegt in der Ebene des Antriebsteils respektive definiert diese Ebene. Vorzugsweise ist auch der zweite Antrieb in dieser Weise aufgebaut. Entsprechende piezoelektrische Antriebe sind in der WO 2006/000 118 offenbart, beispielsweise entsprechend den Ausführungsformen in den Figuren 35-40, insbesondere Ausführungsformen mit nur einem Antriebs- oder Resonatorblech. Es ist damit - im Vergleich mit reinen oder gegebenenfalls auch über einen Hebel wirkenden Piezoelementen - eine relativ lange Auslenkung des Antriebs realisierbar, und damit auch ein relativ grosser Auslenkwinkel um die erste und zweite Achse.

Der mindestens eine Antrieb weist auch im nicht gespeisten Zustand eine Haltekraft auf, ist also selbsthemmend. Dies ist im Gegensatz zu beispielsweise Tauchspulenantrieben, welche dauernd mit Energie versorgt werden müssen, um eine bestimmte Position zu halten. Damit lässt sich ein energiesparender Betrieb realisieren.

In mindestens einer Ausführungsform erlaubt die erste Aufhängung eine Parallelverschiebung des ersten Koppelelements bezüglich der Basis, und erlaubt die zweite Aufhängung eine Parallelverschiebung des zweiten Koppelelements bezüglich der Basis.

In mindestens einer Ausführungsform erlaubt die erste Übertragungseinheit eine Parallelverschiebung des Trägers bezüglich des ersten Koppelelements, und erlaubt die zweite Übertragungseinheit eine Parallel verschiebung des Trägers bezüglich des zweiten Koppelelements.

Mit einer Parallelverschiebung ist eine Bewegung oder Relativbewegung zwischen zwei Körpern bezeichnet, welche die Orientierung der Körper relativ zueinander nicht verändert. Sie weist also keine Rotations-Freiheitsgrade auf (im praktischen Sinne: keine nennenswerten Rotations-Freiheitsgrade). Eine Parallelverschiebung kann eine Translation der Körper relativ zueinander entlang einer oder zwei oder drei zueinander orthogonale Richtungen zulassen. Dabei kann die Bewegung einen, zwei oder drei Translation-Freiheitsgrade aufweisen. Beispielsweise können Parallelverschiebungen folgende Eigenschaften aufweise und wie folgt realisiert sein:
- Translation in nur eine Richtung, ein Translations-Freiheitsgrad:
   Schubgelenk. Die damit realisierte Relativbewegung ist eine Parallelverschiebung mit einem Translations-Freiheitsgrad.
- Translation in zwei Richtungen, ein Translations-Freiheitsgrad:
   Parallelogrammaufhängung mit Drehgelenken. Allgemeiner betrachtet sind diese Drehgelenke Gelenkstellen mit einem Rotations-Freiheitsgrad. Diese Art von Parallelogrammaufhängung wird im Folgenden als Parallelogrammaufhängung mit einem Translations-Freiheitsgrad bezeichnet. Die damit realisierte Relativbewegung ist ebenfalls eine Parallelverschiebung mit einem Translations-Freiheitsgrad.
- Translation in drei Richtungen, zwei Translations-Freiheitsgrade:
   Parallelogrammaufhängung mit Kugelgelenken. Allgemeiner betrachtet sind diese Kugelgelenke Gelenkstellen mit zwei Rotations-Freiheitsgraden. Diese Art von Parallelogrammaufhängung wird im Folgenden als Parallelogrammaufhängung mit zwei Translations-Freiheitsgraden bezeichnet. Die damit realisierbare Translations-Relativbewegung ist eine Parallelverschiebung mit zwei Translations-Freiheitsgraden. Eine solche Aufhängung kann u.U. auch eine Rotation zulassen. Dann kann in Kombination mit einer weiteren Aufhängung ein solcher Rotations-Freiheitsgrad wieder eliminiert werden. Diese weitere Aufhängung bildet eine kinematische Kette parallel zur hier genannten Parallelogrammaufhängung.

Zur Realisierung von Gelenkstellen mit einem Rotations-Freiheitsgrad können anstelle von Drehgelenken auch flache Elemente verwendet werden. Biegeabschnitte dieser Elemente übernehmen die Funktion eines Drehgelenkes. Ein Biegeabschnitt oder eine Biegestelle kann gebildet sein, indem ein Teil des flachen Elementes dünner ausgebildet ist, oder indem das flache Element eine längliche Form aufweist und um eine Achse biegbar ist, die quer oder im wesentlichen senkrecht zur Richtung der grössten Ausdehnung des flachen Elements steht. Wenn das flache Element in einer Ebene liegt, verläuft diese Achse innerhalb dieser Ebene.

Zur Realisierung von Gelenkstellen mit zwei Rotations-Freiheitsgraden können anstelle von Kugelgelenken auch Elemente verwendet werden, die in Biegeabschnitten in zwei Richtungen biegbar sind. Dies können elastische Stäbe oder Drähte sein. Sie können aus Kunststoff oder Metall oder einer Kombination bestehen. Ein Biegeabschnitt kann, muss aber nicht als Verjüngung eines Stabes oder Drahtes ausgebildet sein.

In mindestens einer Ausführungsform sind eine oder mehrere der Parallelverschiebungen jeweils mit einer Parallelogrammaufhängung realisiert. Eine Parallelverschiebung mit einem Translations-Freiheitsgrad ist dabei also mit einer Parallelogrammaufhängung mit einem Translations-Freiheitsgrad realisiert. Eine Parallelverschiebung mit zwei Translations-Freiheitsgraden ist dabei also mit einer Parallelogrammaufhängung mit zwei Translations-Freiheitsgraden realisiert.

In mindestens einer Ausführungsform sind mindestens die erste Aufhängung und/oder die zweite Aufhängung durch eine Parallelogrammaufhängung mit mindestens zwei flachen Federelementen realisiert, welche parallel zueinander angeordnet sind und das jeweilige Koppelelement mit der Basis verbinden.

In mindestens einer Ausführungsform weist die Parallelverschiebung des ersten Koppelelements bezüglich der Basis genau einen Translations-Freiheitsgrad auf, und weist die Parallelverschiebung des zweiten Koppelelements bezüglich der Basis genau einen Translations-Freiheitsgrad auf.

In mindestens einer Ausführungsform weist die Parallelverschiebung des Trägers bezüglich des ersten Koppelelements genau zwei Translations-Freiheitsgrade auf. und weist die Parallelverschiebung des Trägers bezüglich des zweiten Koppelelements genau zwei Translations-Freiheitsgrade auf.

In mindestens einer Ausführungsform weist die Parallelverschiebung des Trägers bezüglich des ersten Koppelelements genau einen Translations-Freiheitsgrad auf, und weist die Parallelverschiebung des Trägers bezüglich des zweiten Koppelelements genau einen Translations-Freiheitsgrad auf.

In mindestens einer Ausführungsform weist die Positioniervorrichtung
- ein drittes Koppelelement auf, welches mit einer dritten Aufhängung bezüglich des ersten Koppelelements beweglich montiert ist und mit einem dritten Antrieb bewegbar ist, sowie
- eine dritte Übertragungseinheit, mit welcher eine Bewegung des dritten Koppelelements an den Träger übertragbar ist.

Das dritte Koppelelement kann in einer Aussparung im ersten Koppelelement angeordnet sein. Die drei Antriebe können jeweils an einer von vier Ecken einer im Wesentlichen rechteckförmigen Positioniervorrichtung angeordnet sein.

In mindestens einer Ausführungsform sind, wenn der Träger oberhalb der Basis angeordnet ist (also in Z-Richtung bezüglich der Basis versetzt), das erste Koppelelement und das zweite Koppelelement seitlich des Trägers angeordnet sind (also in X- respektive Y-Richtung bezüglich des Trägers versetzt).

Das erste Koppelelement erstreckt sich in entlang einer ersten Seite der Positioniervorrichtung und führt eine Bewegung in die Richtung normal zu dieser ersten Seite aus. Das zweite Koppelelement erstreckt sich in entlang einer zweiten Seite der Positioniervorrichtung und führt eine Bewegung in die Richtung normal zu dieser zweiten Seite aus.

In mindestens einer Ausführungsform umfängt, wenn der Träger oberhalb der Basis angeordnet ist (also in Z-Richtung bezüglich der Basis versetzt), das erste Koppelelement den Träger zumindest abschnittsweise und ist in einem unteren Bereich des Trägers angeordnet. Das zweite Koppelelement dagegen umfängt den Träger zumindest abschnittsweise und ist in einem oberen Bereich des Trägers angeordnet.

In einer Ausführungsform weist die Positioniervorrichtung auf:
- ein drittes Koppelelement, welches mit einer dritten Aufhängung bezüglich der Basis beweglich montiert ist und mit einem dritten Antrieb bewegbar ist,
- eine dritte Übertragungseinheit, mit welcher eine Bewegung des dritten Koppelelemems an den Träger übertragbar ist.
- wobei jede der drei Übertragungseinheiten an einer anderen Kontaktstelle an einem Umfang des Trägers angreift und alle drei Übertragungseinheiten eine im wesentlichen translatorische Bewegung der entsprechenden Kontaktstelle bewirken.

In mindestens einer Ausführungsform erlaubt die die erste Aufhängung eine Rotation des ersten Koppelelements bezüglich der Basis, und erlaubt die zweite Aufhängung eine Rotation des zweiten Koppelelements bezüglich der Basis.

Die Rotationsachsen der beiden Aufhängungen sind dabei voneinander verschieden. Die Rotationsachsen können orthogonal zueinander sein, insbesondere in einer Projektion auf eine Ebene, welche normal zur kürzesten Verbindung der beiden Rotationsachsen steht.

In mindestens einer Ausführungsform erlaubt die die erste Übertragungseinheit eine Rotation des Trägers bezüglich des ersten Koppelelements, und erlaubt die zweite Übertragungseinheit eine Rotation des Trägers bezüglich des zweiten Koppelelements.

In mindestens einer Ausführungsform gilt in einer Referenzposition des Trägers, dass
- eine Drehachse der ersten Aufhängung parallel zu einer Drehachse der zweiten Übertragungseinheit verläuft oder mit dieser Drehachse koinzidiert, und dass
- eine Drehachse der zweiten Aufhängung parallel zu einer Drehachse der ersten Übertragungseinheit verläuft oder mit dieser Drehachse koinzidiert.

In mindestens einer Ausführungsform sind mehrere federnde Elemente einer der Aufhängungen, einstückig als Abschnitte eines ursprünglich flachen Teiles gebildet. In mindestens einer Ausführungsform sind mehrere federnde Elemente von verschiedenen der Aufhängungen, einstückig als Abschnitte eines ursprünglich flachen Teiles gebildet. In mindestens einer Ausführungsform sind mehrere federnde Elemente von mindestens einer der Aufhängungen, und mindesten einer der Übertragungseinheiten, einstückig als Abschnitte eines ursprünglich flachen Teiles gebildet. Mit einer oder mehreren dieser Kombinationen von federnden Elementen zu einem einstückigen Teil ist eine Vereinfachung der Herstellung möglich.

In mindestens einer Ausführungsform trägt der Träger einen Linsenhalter mit einem optischen Linsensystem und trägt die Basis einen optischen Aufnehmer oder Bildaufnehmer. Damit ist ein (optischer) Bildstabiltsator realisierbar.

In mindestens einer Ausführungsform weist die Lagerungsvorrichtung ein im Träger angeordnetes Mikrokameramodul auf, also eine Einheit mit sowohl einem Linsensystem als auch einem optischen Aufnehmer, die durch die Positioniervorrichtung miteinander bewegt werden. Dabei kann das Mikrokameramodul respektive ein Gehäuse oder eine Halterung des Mikrokameramoduls selber den Träger bilden. Auch damit ist ein (optischer) Bildstabilisator realisierbar.

Das Mikrokameramodul selber oder der Linsenhalter kann auch einen oder mehrere Motoren aufweisen, um beispielsweise die Schärfe und/oder eine Zoomeinstellung zu verstellen. Es können solche Antriebe, wie hier und in der schon zitierten WO 2006/000 118 beschrieben verwendet werden, oder anders geartete Antriebe, beispielsweise elektromagnetische Aktoren wie Tauchspulen- oder "Voice coil"-Aktoren.

In einigen Ausführungsformen sind aktive Elemente der Antriebe an der Basis montiert, und passive Elemente an Teilen, welche bezüglich der Basis bewegt werden. In anderen Ausführungsformen ist - je nach den Raumverhältnissen und zur Reduktion des Raumbedarfes - umgekehrt auch das aktive Element an einem bewegten Teil und das passive Element an der Basis montiert. Es kann auch in derselben Ausführungstorm einem Antrieb das aktive Element an der Basis und bei einem anderen Antrieb das aktive Element an einem bewegten Teil montiert sein.

In den bisherigen Beispielen sind die Aufhängungen jeweils zwischen Basis und den Koppelelementen angeordnet, und die Übertragungseinheiten jeweils zwischen den Koppelelementen und dem Träger. Die Folge kann jedoch auch umgekehrt sein, also dass die Übertragungseinheiten jeweils zwischen Basis und den Koppelelementen angeordnet, und die (angetriebenen) Aufhängungen jeweils zwischen den Koppelelementen und dem Träger Anders gesagt können also Basis und Träger ihre Rollen tauschen: die als Träger bezeichneten Teile können als Basis dienen, und die als Basis bezeichneten Teile können als Träger dienen.

Wenn im vorliegenden Dokument die Rede davon ist, dass eine Aufhängung oder eine Übertragungseinheit eine bestimmte Anzahl von Freiheitsgraden aufweist, dann kann dies bedeuten, wenn sie durch federnde Elemente realisiert ist, dass eine Federkonstante bezüglich einer Bewegung in der oder den Dimensionen entsprechend den Freiheitsgraden (also jene, in welchen die Aufhängung oder Übertragungseinheit nachgiebig ist) mindestens fünf oder zehn oder zwanzig oder fünfzig oder hundert mal kleiner ist als in anderen (orthogonalen)Dimensionen (also jene, in welchen die Aufhängung oder Übertragungseinheit starr ist).

Weitere bevorzugte Ausführungsformen gehen aus den abhängigen Patentansprüchen hervor.

Im folgenden wird der Erfindungsgegenstand anhand von bevorzugten Ausführungsbeispielen, welche in den beiliegenden Zeichnungen dargestellt sind, näher erläutert. Es zeigen jeweils, zum Teil schematisch:
- Figuren 1a-1h: eine Ausführungsform mit einem in drei translatorische Richtungen beweglichen Träger;
- Figuren 2a-2c: eine Ausführungsform mit einem in zwei translatorische Richtungen beweglichen Träger;
- Figuren 3a-3e: eine Ausführungsform mit einem um zwei Rotatationsachsen drehbaren und in eine translatorische Richtung beweglichen Träger;
- Figur 4: eine weitere Ausführungsform mit einem um zwei Rotatationsachsen drehbaren und in eine translatorische Richtung beweglichen Träger;
- Figuren 5a-5d: eine Ausführungsform mit einem um zwei Rotatationsachsen drehbaren Träger;
- Figuren 6a-6d: eine Variante der Ausführungsfonn der Figuren 1a-1h;
- Figuren 7a-7c: jeweils mehrere Federelemente, die als Abschnitte eines einstückigen Teiles ausgebildet sind;
- Figuren 8a-8e: eine weitere Variante der Ausführungsform der Figuren 1a-1h; und
- Figur 9: zwei Federelemente an einem einstückigen Teil.

Grundsätzlich sind in den Figuren gleiche oder gleich wirkende Teile mit gleichen Bezugszeichen versehen.

Die nachstehenden Erklärungen gelten für alle Ausführungsformen:
- An einer Basis 4 ist ein erstes Koppelelement 13 über eine erste Aufhängung 11 beweglich montiert. Ein erster Antrieb 12 bewegt das erste Koppelelement 13 bezüglich der Basis 4. Das erste Koppelelement 13, die erste Aufhängung 11, der erste Antrieb 12 und ggf. weitere Elemente wie Übertragungseinheiten bilden eine erste Positioniereinheit 1.
- An der Basis 4 ist ein zweites Koppelelement 23 über eine zweite Aufhängung 21 beweglich montiert Ein zweiter Antrieb 22 bewegt das zweite Koppelelement 23 bezüglich der Basis 4. Das zweite Koppelelement 23, die zweite Aufhängung 21, der zweite Antrieb 22 und ggf. weitere Elemente wie Übertragungseinheiten bilden eine zweite Positioniereinheit 2.
Die Aufhängungen 11, 21 können mit Federblättern (engl. spring leaves) realisiert sein, also mit flachen Federelementen. Dabei sind zwei relativ zueinander bewegbare Körper über zwei oder mehr Federblätter als Verbindungskörper verbunden. Die Federblätter sind jeweils an einem Ende an beispielsweise der Basis 4 und mit dem anderen Ende an beispielsweise einem Koppelelement 13, 23 befestigt. Ein Federblatt ist im wesentlichen flach und liegt mindestens abschnittsweise in einer Ebene. Bewegliche Abschnitte der verschiedenen Federblätter einer Aufhängung sind jeweils gleich lang. Die Federblätter sind mindestens stellenweise elastisch biegbar. Dadurch bilden sie Gelenkstellen oder Gelenkabschnitte mit der Funktion jeweils eines Drehgelenkes. Ein Federblatt ist typischerweise aus Metall, kann aber auch aus einem Kunststoff gefertigt sein. Es kann auch einstückig mit einem der Körper, mit welchem es verbunden ist, gefertigt sein. Es kann auch einstückig mit anderen Federblättern gefertigt sein. Dazu kann ein ursprünglich flaches Blechteil so geformt und gebogen sein, dass verschiedene Abschnitte des Blechteiles als Federblätter wirken. Diese verschiedenen Federblätter können in unterschiedlichen Aufhängungen und/oder Übertragungseinheiten wirken und dabei als ein einziges Bauelement montiert werden.

Die verschiedenen verwendeten Antriebe sind als piezoelektrische Antriebe realisiert. Es können jedoch einzelne davon auch durch andere Antriebssysteme ersetzt werden. Die Antriebe sind gleichartig aufgebaut und werden im folgenden anhand des ersten Antriebs 12 erklärt: Der Antrieb 12 weist einen aktiven Teil oder Antriebsteil oder aktives Element 121 auf, und einen passiven Teil oder passives Element 122 Der Antriebsteil 121 weist einen flachen Resonator 123 aus, beispielsweise aus einem Metallblech, und einen oder mehrere Piezoelemente 124. Das oder die Piezoelemente 124 werden durch einen nicht gezeichneten Spannungserzeuger mit einer elektrischen Spannung angeregt. Die dadurch entstehende Schwingung des Resonators 123 erzeugt an Kontaktbereichen des Resonators, welche mit dem passiven Teil 122 zumindest zeitweise in Berührung stehen, intermittierende Kontaktkräfte, Durch die Wahl der Anregungsfrequenz können Schwingungsmodi gewählt werden, bei denen die Bewegung der Kontaktbereiche wahlweise den passiven Teil 122 in die eine oder die andere Richtung treibt Weitere Details zu dieser Art Antrieb sind der WO 2006/000 118 zu entnehmen

Der Antrieb ist grundsätzlich als Linearantrieb aufgebaut Die Bewegung des passiven Teils 122 ist durch die jeweilige Aufhängung vorgegeben und ist in der Regel eine translatorische oder eine rotatorische Bewegung mit einem Freiheitsgrad. Wenn der Antrieb zwei Körper bezüglich einander antreibt, so kann das aktive Teil 121 am einen Körper und das passive Teil 122 am anderen Körper befestigt sein, oder umgekehrt. Beispielsweise kann also das aktive Teil 121 an der Basis 4 und das passive Teil 122 am jeweiligen Koppelelement befestigt sein, oder umgekehrt. Das passive Teil 122 kann auch als Teil des anderen Körpers ausgebildet sein.

Die Regelung der Antriebe erfordert in der Regel eine Positionsmessung zur Bestimmung der linearen Position des Antriebs entlang seiner Bewegungsrichtung. Dazu können einerseits Magnete 15, 25, 35 an der bewegten Teilen und dazu korrespondierend angeordnete Hallsensoren 16, 26. 36 an der Basis montiert sein, oder umgekehrt.

Eine Referenzebene der Basis 4 wird im folgenden als durch Richtungen X und Y aufgespannt betrachtet. Eine Z-Richtung ist normal zu der durch die Richtungen X und Y aufgespannten X-Y-Ebene. Eine Achse des Trägers 5 steht, in einem nicht ausgelenkten Zustand oder Ruheposition oder Referenzposition des Trägers 5, parallel zur Z-Richtung.

Wenn die Positioniervorrichtung zur optischen Bildstabiltsierung eingesetzt wird, so ist vorteilhafterweise die X-Y-Ebene parallel zu einer Ebene, in welcher ein Bildaufnehmer liegt. Die Achse des Trägers 5 ist vorteilhafterweise gleich der optischen Achse eines Linsensystems welches im oder am Träger 5 angeordnet ist.

Mögliche Dimensionen für die Positioniervorrichtung der verschiedenen Ausführungsformen sind beispielsweise eine Grundfläche der Basis 4 mm von 8.5 mm im Quadrat bis 12 mm im Quadrat, insbesondere von 11.5 mm im Quadrat. Die Höhe der Positioniervorrichtung beträgt beispielsweise zwischen 4 mm und 6 mm, je nach Dicke der verwendeten Linsen auch bis zu 7 mm oder 8 mm.

Im Folgenden wird nun auf die einzelnen Ausführungsformen eingegangen:

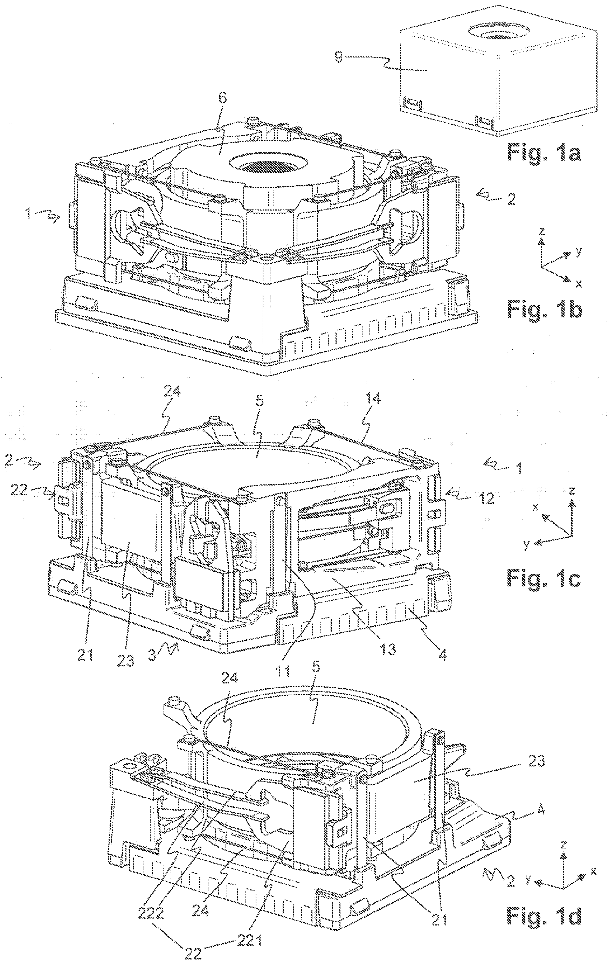

**Figuren 1a-1h** zeigen eine Ausführungsform mit einem in drei translatorische Richtungen beweglichen Träger in verschiedenen Ansichten. In der **Figur 1a** ist die Positioniervorrichtung mit einem Gehäuse 9 zur elektromagnetischen Kompatibilität abgedeckt Nebst den bereits beschriebenen Elementen ist in den folgenden Figuren sichtbar:
In der **Figur 1b** ist die Positioniervorrichtung in einer Ansicht von einer ersten Seite her dargestellt. Es ein Linsenhalter 6 mit optischen Linsen in den Träger 5 eingesetzt dargestellt. Ein optischer Aufnehmer 7 unterhalb der Linsen respektive des Trägers 5 an der Basis 4 angeordnet, aber in dieser Ansicht nicht sichtbar. In den weiteren Figuren ist der Linsenhalter 6 nicht mehr dargestellt. Der Linsenhalter 6 kann mit einem Gewinde im Träger 5 eingeschraubt sein. Das Gewinde kann vom Typ M6 bis M8.5 sein. Dann kann der Linsenhalter 6 bei der Montage im Träger 5 entsprechend der tatsächlichen Brennweite des Linsensystems positioniert werden. Die hier beschriebene Art der Montage des Linsenhalters 6 ist auch in den anderen Ausführungsformen realisierbar.
- In der **Figur 1c** ist die Positioniervorrichtung in einer Ansicht von der gegenüberliegenden Seite her dargestellt. Hier und in den verbleibenden Figuren dieser Ausführungsform ist der Linsenhalter 6 nicht mehr eingezeichnet.
- In der **Figur 1d** sind die Elemente für die Bewegung des Trägers 5 in Y-Richtung eingezeichnet.

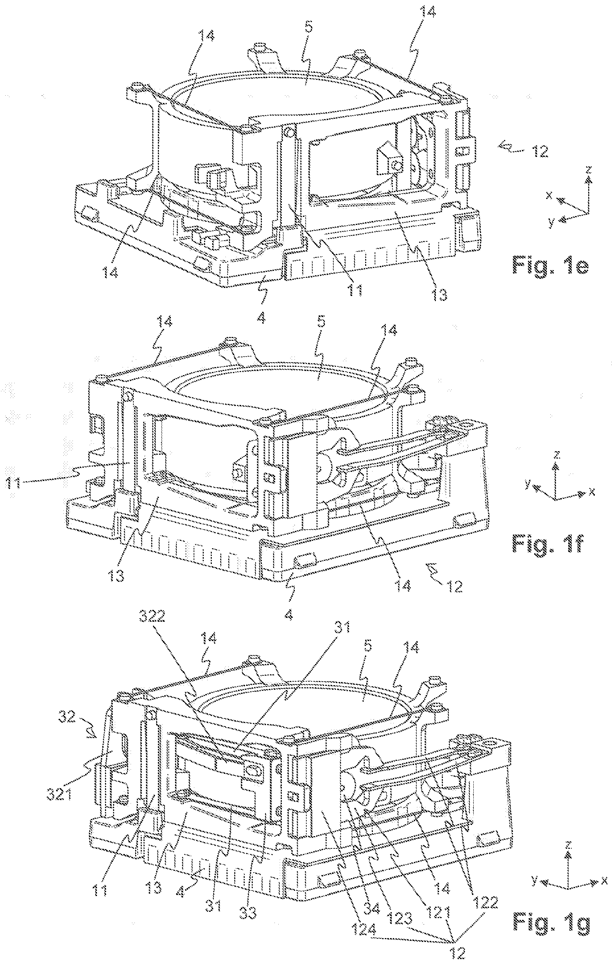

- In den **Figuren 1e** und **1f** sind die Elemente für die Bewegung des Trägers 5 in X-Richtung eingezeichnet.
- Die **Figur 1g** entspricht der **Figur 1f****,** wobei zusätzlich die Elemente für die Bewegung des Trägers 5 in Z-Richtung eingezeichnet sind.

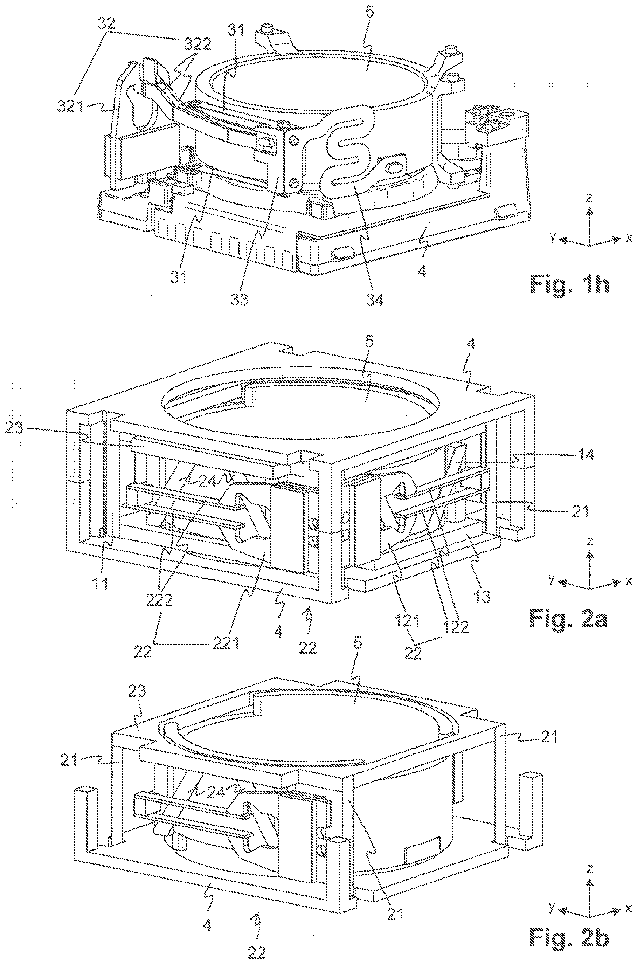

- In der **Figur 1h** entspricht der **Figur 1g****,** wobei nur die Elemente für die Bewegung des Trägers 5 in Z-Richtung eingezeichnet sind, also jene für die X-Richtung weggelassen sind.

In den **Figuren 1g** und **1h** ist dargestellt: Am ersten Koppelelement 13 ist ein drittes Koppelelement 33 über eine dritte Aufhängung 31 beweglich montiert. Ein dritter Antrieb 32 bewegt das dritte Koppelelement 33 bezüglich des ersten Koppelelements 13. Der dritte Antrieb 32 ist also auf dem ersten Koppelelement 13 angeordnet und mit diesem mitbewegt. Das dritte Koppelelement 33 ist über eine dritte Übertragungseinheit 34 mit dem Träger 5 verbunden. Das dritte Koppelelement 33, die dritte Aufhängung 31, der dritte Antrieb 32 und ggf. weitere Elemente wie Übertragungseinheiten bilden eine dritte Positioniereinheit 3.

Die Federblätter der drei Aufhängungen 11, 21, 31 sind jeweils parallel (d.h. mit ihren jeweiligen Ebenen parallel) zueinander angeordnet und bilden so jeweils eine Parallelogrammaufhängung mit genau einein Translations-Freiheitsgrad.

Das erste Koppelelement 13 ist Ober eine erste Übertragungseinheit 14 mit dem Träger 5 verbunden. Das zweite Koppelelement 23 ist über eine zweite Übertragungseinheit 24 mit dem Träger 5 verbunden. Die Übertragungseinheiten 14, 24 sind durch Parallelogrammaufhängungen mit jeweils zwei Translations-Freiheitsgraden realisiert. Dazu sind jeweils mindestens drei längliche Verbindungskörper, beispielsweise Drähte oder Stäbe als parallel zueinander angeordnet. Bewegliche Abschnitte der verschiedenen Verbindungskörper einer Übertragungseinheit sind jeweils gleich lang. Die Verbindungskörper sind mindestens stellenweise elastisch biegbar. Dadurch bilden sie Gelenkstellen oder Gelenkabschnitte mit der Funktion jeweils eines Kugelgelenkes. Ein Verbindungskörper ist typischerweise aus Metall, kann aber auch aus einem Kunststoff gefertigt sein. Es kann auch einstückig mit einem der Körper, mit welchem es verbunden ist, gefertigt sein.

Das erste Koppelelement 13 ist in eine erste Richtung bezüglich der Basis 4 bewegbar, im folgenden auch X-Richtung genannt. Das zweite Koppelelement 23 ist m eine zweite Richtung bezüglich der Basis 4 bewegbar, im folgenden auch Y-Richtung genannt. Diese beiden Richtungen sind nicht parallel, und typischerweise im wesentlichen orthogonal zueinander. Das dritte Koppelelement 33 ist in eine dritte Richtung bezüglich der Basis 4 respektive des ersten Koppelelements 13, an dem es aufgehängt ist, bewegbar. Die dritte Richtung, im Folgenden auch Z-Richtung genannt, ist zu keiner der anderen beiden Richtungen parallel, und ist typischerweise im wesentlichen orthogonal zu den beiden anderen Richtungen.
- Die Bewegung des ersten Koppelelements 13 ist auf eine Translation in X-Richtung beschränkt. Der Träger 5 ist durch die erste Übertragungseinheit 14 in X-Richtung im wesentlichen starr an die Bewegung des ersten Koppelelements 13 gekoppelt jedoch in Y- und Z-Richtung bezüglich des ersten Koppelelements 1 3 beweglich.
- Die Bewegung des zweiten Koppelelements 23 ist auf eine Translation in Y-Richtung beschränkt. Der Träger 5 ist durch die zweite Übertragungseinheit 24 in Y-Richtung im wesentlichen starr an die Bewegung des zweiten Koppelelements 23 gekoppelt, jedoch in X- und Z-Richtung bezüglich des zweiten Koppelelements 23 beweglich.
- Die Bewegung des dritten Koppelelements 33 ist auf eine Translation in Y-Richtung beschränkt. Der Träger 5 ist durch die dritte Übertragungseinheit 34 in Z-Richtung im wesentlichen starr an die Bewegung des dritten Koppelelements 33 gekoppelt, jedoch in Y-Richtung bezüglich des zweiten Koppelelements 23 beweglich.
Eine Relativbewegung zwischen dem dritten Koppelelement 33 und dem ersten Koppelelement 13 in X-Richtung findet nicht statt, da das dritte Koppelelement 33 mit dem ersten Koppelelement 13 mitbewegt ist.

Die dritte Übertragungseinheit 34 ist hier durch eine flache Feder realisiert, die sich in Z-Richtung vom dritten Koppelelement 33 zum Träger 5 erstreckt. Die Feder liegt im Ruhezustand in einer Ebene, welche normal zur Y-Richtung liegt. Die Feder ist in der Z-Richturg (also bezüglich einer Relativbewegung parallel zur Ebene) nicht nachgiebig, in der Y-Richtung aber kann sie aus der Ebene hinausgebogen werden. Die Feder kann eine gerade Blattfeder sein. Wenn sie so wie hier gezeigt mäanderförmig ist, ist ihre Nachgiebigkeit in der Y-Richtung erhöht.

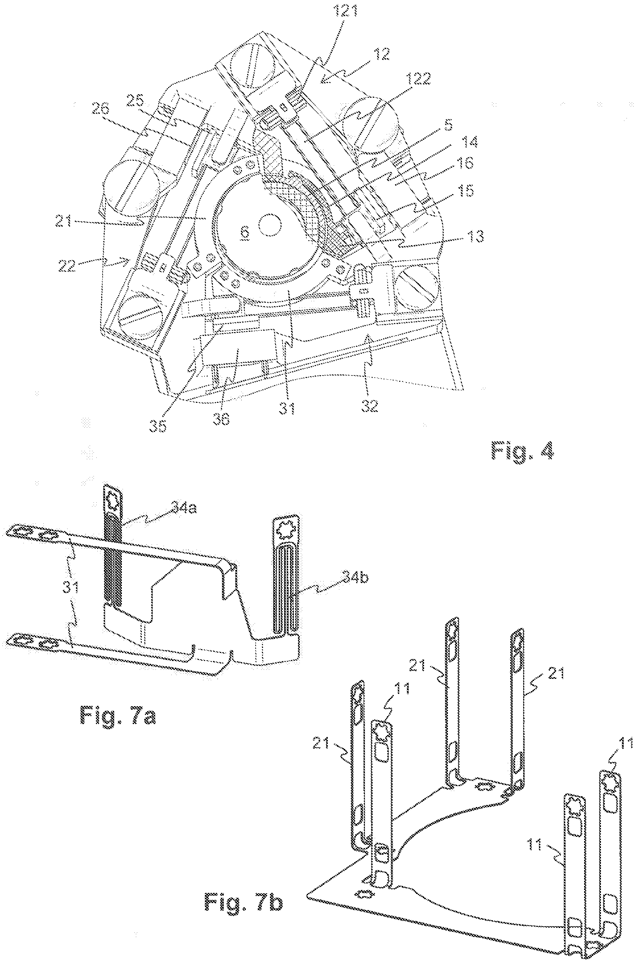

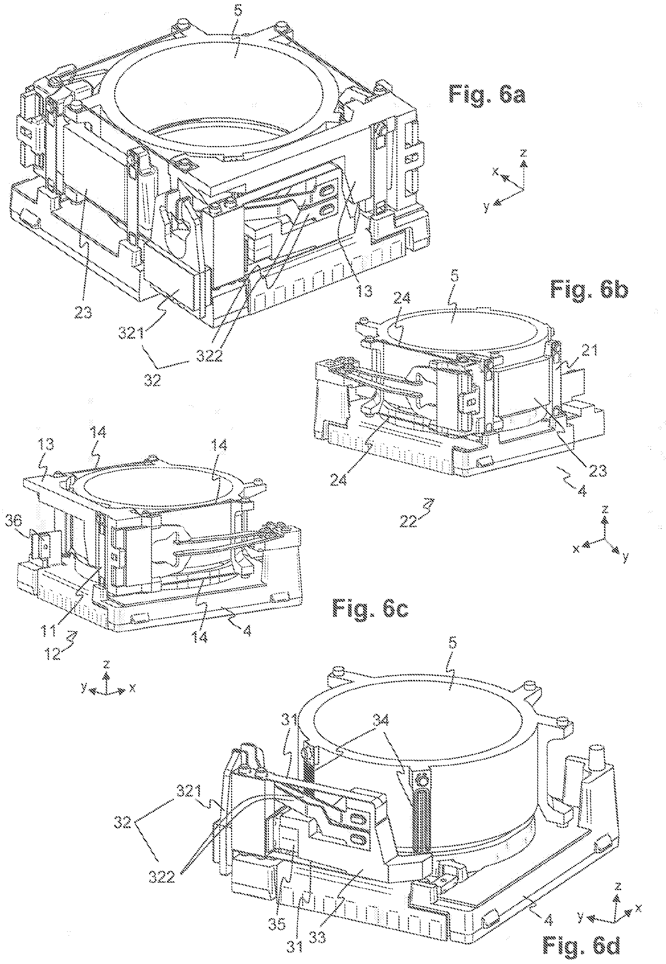

Eine zweite Variante der Ausführungsform der **Figuren 1a-1h** ist in den **Figuren 6a-****6d** dargestellt. **Figur 6a** zeigt alle, **Figur 6b** zeigt nur die zweite, **Figur 6c** nur die erste, und **Figur 6d** nur die dritte der drei Positioniereinheiten. Hier ist das dritte Koppelelement 33 bezüglich der Basis 4 beweglich montiert und angetrieben, und lässt die dritte Übertragungseinheit 34 eine Relativbewegung zwischen dem dritten Koppelelement 33 und dem Träger 5 in X- wie auch in Y-Richtung zu. In Z-Richtung ist die dritte Übertragungseinheit 34 hingegen steif. Sie weist also im im wesentlichen zwei translatorische Freiheitsgrade auf. Beispielsweise kann dazu die dritte Übertragungseinheit 34 in gleicher Weise wie die erste Übertragungseinheit 14 realisiert sein. Alternativ kann sie, wie in den **Figuren 6d** und **7a** sichtbar, durch Elemente mit kinematisch gesehen parallel angeordneten mäandernden Teilelementen realisiert werden. In den genannten Figuren **6d** und **7a** sind jeweils zwei solcher Elemente 34a. 34b an einem einzigen Teil ausgebildet gezeigt, sie können aber auch als separate Teile ausgebildet sein.

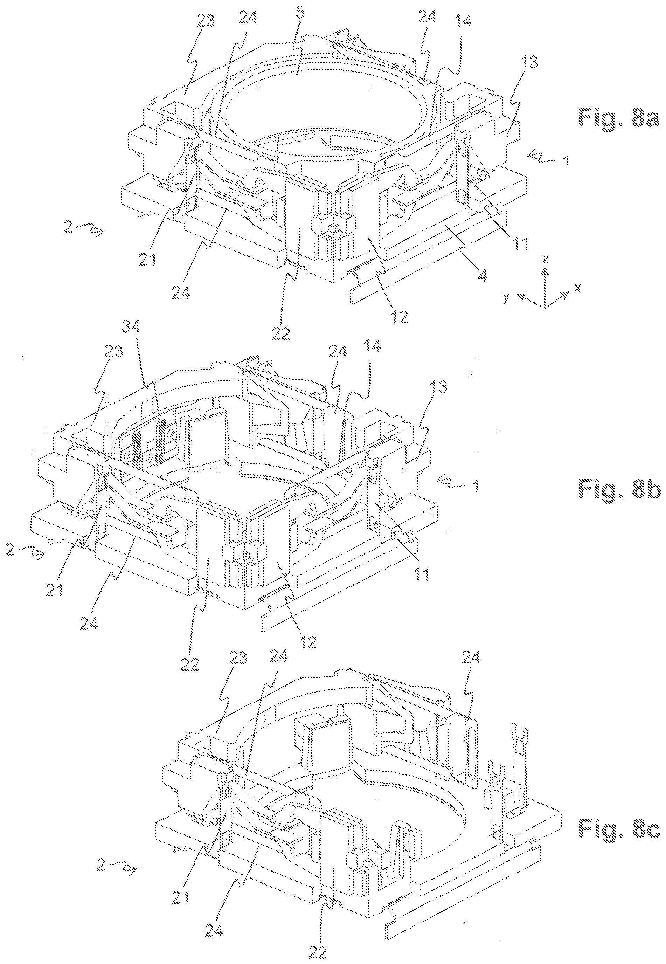

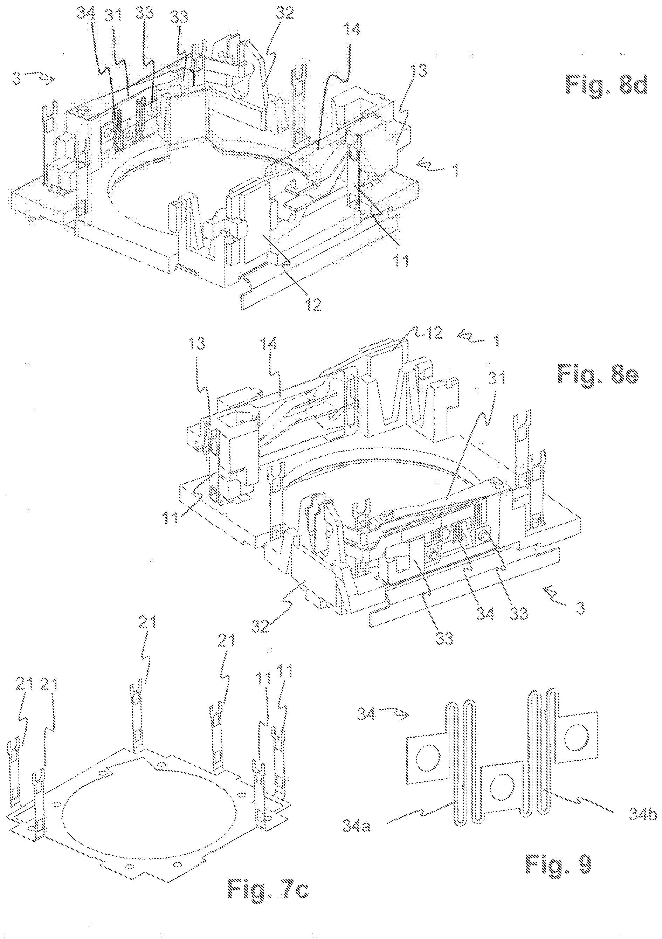

Eine dritte Variante der Ausführungsform der **Figuren 1a-1h** ist in den **Figuren 8a-****8e** dargestellt. **Figuren 8a** und **8b** zeigen alle, **Figur 8c** zeigt nur die zweite, **Figuren 8d** und **8e** nur die erste und die dritte der drei Positioniereinheiten. Auch hier ist-wie in der Variante der **Figuren 6a-6d** - das dritte Koppelelement 33 bezüglich der Basis 4 beweglich montiert und angetrieben, und lässt die dritte Übertragungseinheit 34 eine Relativbewegung zwischen dem dritten Koppelelement 33 und dem Träger 5 in X- wie auch in Y-Richtung zu. In Z-Richtung ist die dritte Übertragungseinheit 34 hingegen steif. Sie weist also im im wesentlichen zwei translatorische Freiheitsgrade auf. Beispielsweise kann dazu die dritte Übertragungseinheit 34 in gleicher Weise wie die erste Übertragungseinheit 14 realisiert sein. Alternativ kann sie, wie in den **Figuren 8b, 8c** und **9** sichtbar, durch Elemente mit kinematisch gesehen parallel angeordneten mäandernden Teilelementen realisiert werden. In den genannten Figuren **8b****,** **8e** und **9** sind jeweils zwei solcher Elemente 34a, 34b an einem einzigen Teil ausgebildet gezeigt, sie können aber auch als separate Teile ausgebildet sein.

Für die zweite und die dritte Variante gilt: Durch die Überlagerung der kinematischen Bindungen des Trägers 5 über die drei Koppelelemente 13, 23. 33 und Übertragungseinheiten 14, 24, 34 ist die Position des Trägers 5 in drei translatorischen Dimensionen eindeutig bestimmt. Die Position in jeder Dimension kann im wesentlichen unabhängig über einen der drei Antriebe 12, 22, 32 eingestellt werden. Optional können Sensoren wie Hall-Sensoren die Position der einzelnen Koppelelemente, insbesondere des dritten, völlig unabhängig von der Position der anderen Koppelelemente bestimmen.

Die dritte Variante ist grundsätzlich analog zu den ersten beiden Varianten aufgebaut. Sie unterscheidet sich mindestens in den folgenden Punkten:
- Die ersten und zweiten Übertragungseinheiten 14, 24 sind nicht durch Drähte realisiert, sondern durch gebogene Blechteile. Einschnürungen an diesen Blechteilen entsprechen funktional Drähten und damit Gelenken, mit welchen die Übertragungseinheiten eine Drehung um zwei Achsen zulassen, und dabei gegenüber einer Translation durch Drehpunkte dieser Gelenke steif sind.
- mindestens eines der passiven Elemente 122, 222 ist in der folgenden Weise ausgestaltet: es weist zwei einzelne elastisch verformbare Federelemente auf, die gemeinsam um eine Achse drehbar montiert sind. Die Drehung um die Achse kann durch ein Festkörpergelenk realisisert sein. Toleranzen in der gegenseitigen Lage der Federelemente bezüglich des aktiven Elementes werden ausgeglichen, indem sich die beiden Federelemente zusammen um diese Achse drehen. Die Achse verläuft normal zur Bewegungsrichtung des passiven Elements.

Die Ausführungsform der **Figuren 1a-1h** oder **6a-6d** oder **8a-8e** kann alternativ auch ohne Bewegbarkeit in Z-Richtung realisiert werden. In diesem Fall entfallen, das dritte Koppelelement 33 mit dem dazugehörigen Antrieb und Übertragungseinheit. Die erste Übertragungseinheit 14 und die zweite Übertragungseinheit 24 können dann mit Parallelogrammaufhängungen mit jeweils nur einem statt mit zwei Translations-Freiheitsgraden realisiert sein. Durch die Überlagerung der kinematischen Bindungen des Trägers 5 über die zwei Koppelelemente 13, 23 und Übertragungseinheiten 14, 24 in X- und Y-Richtung ist die Position des Trägers 5 in diesen zwei translatorischen Dimensionen eindeutig bestimmt. Die Position in beide Richtungen kann im wesentlichen unabhängig über einen der entsprechenden zwei Antriebe 12,22 eingestellt werden.

Die passiven Elemente 122, 222 der beiden Antriebe 12, 22 erstrecken sich jeweils entlang einer ersten und einer zweiten Seite der Positioniervorrichtung im Wesentlichen in X- respektive Y-Richtung und sind an einem ersten Ende an der Basis 4 befestigt und an einem zweiten, vom ersten entfernten Ende in Kontakt mit dem ersten respektive zweiten aktiven Element 121. 221. Die aktiven Elemente 121, 221 der beiden Antriebe 12, 22 sind am jeweiligen Koppelelement 13, 23 befestigt und mit diesem mitbewegt.

An den jeweils ersten Enden der passiven Elemente können diese wie folgt befestigt sein: ein passives Element weist zwei einzelne elastisch verformbare Federelemente oder Federblätter auf. In einem unbelasteten Zustand ist jedes der Federblätter flach, verläuft also in einer Ebene. Eine Befestigungsstelle der ersten Feder und eine Befestigungsstelle der zweiten Feder sind schräg zueinander ausgerichtet, so dass im unbelasteten Zustand die Federblätter voneinander weg gespreizt sind. Wenn im montierten Zustand des Antriebs das aktive Element die Federblätter umfängt, drückt es diese somit mit einer Vorspannung zusammen. Damit weist der Antrieb auch im nicht gespeisten Zustand eine Haltekraft auf.

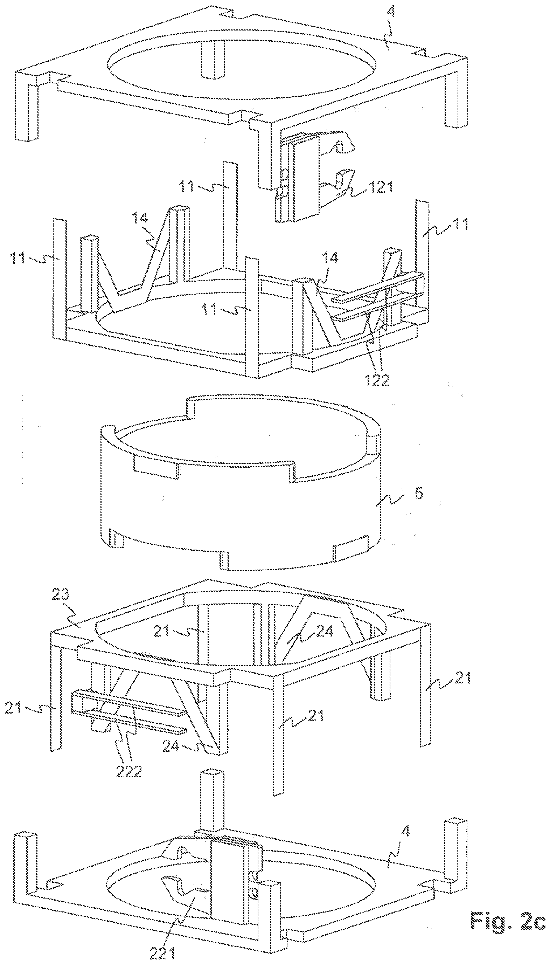

**Figuren 2a-2c** zeigen eine Ausführungsform mit einem in zwei translatorische Richtungen beweglichen Träger. Nebst den bereits beschriebenen Elementen liegen hier vor:

Die Federblätter der zwei Aufhägungen 11. 21 sind jeweils parallel (d.h. mit ihren jeweiligen Ebenen parallel) zueinander angeordnet und bilden so jeweils eine Parallelogrammaufhängung mit genau einem Translations-Freiheitsgrad. Jeweils ein Paar von Federblättern, die in der gleichen Ebene liegen, verlaufen innerhalb dieser Ebene nicht parallel zueinander. Sie bewegen sich miteinander und bleiben dabei im wesentlichen in derselben Ebene.

Das erste Koppelelement 13 ist in eine erste Richtung bezüglich der Basis 4 bewegbar, im folgenden auch X-Richtung genannt. Das zweite Koppelelement 23 ist in eine zweite Richtung bezüglich der Basis 4 bewegbar, im folgenden auch Y-Richtung genannt. Diese beiden Richtungen sind nicht parallel, und typischerweise im wesentlichen orthogonal zueinander.
- Die Bewegung des ersten Koppelelements 13 ist auf eine Translation in X-Richtung beschränkt. Der Träger 5 ist durch die erste Übertragungseinheit 14 in X-Richtung im wesentlichen starr an die Bewegung des ersten Koppelelements 13 gekoppelt, jedoch in Y-Richtung bezüglich des ersten Koppelelements 13 beweglich.
- Die Bewegung des zweiten Koppelelements 23 ist auf eine Translation in Y-Richtung beschränkt. Der Träger 5 .ist durch die zweite Übertragungseinheit 24 in Y-Richtung im wesentlichen starr an die Bewegung des zweiten Koppelelements 23 gekoppelt, jedoch in X-Richtung bezüglich des zweiten Koppelelements 23 beweglich.
Durch die Überlagerung der kinematischen Bindungen des Trägers 5 über die zwei Koppelelemente 13, 23 und Übertragungseinheiten 14,24 ist die Position des Trägers 5 in zwei translatorischen Dimensionen eindeutig bestimmt. Die Position in jeder Dimension kann im wesentlichen unabhängig über einen der zwei Antriebe 12, 22 eingestellt werden.

Eine Raum sparende Konfiguration ist wie folgt realisiert: die gesamte Positioniervorrichtung erstrecke sich von einem oberen Bereich zu einem unteren Bereich. Bei einem Bildstabilisator liegt beispielsweise ein Bildaufnehmer auf der Basis 4 und im unteren Bereich, und eine verstellbare Optik auf dem Träger 5, mit dem Lichteintritt im oberen Bereich.
- Das erste Koppelelement 13 ist im unteren Bereich angeordnet, wobei sich die erste Aufhängung 11 vom oberen Bereich zum unteren Bereich erstreckt, im oberen Bereich an der Basis 4 befestigt ist und im unteren Bereich am ersten Koppelelement 13 befestigt ist. Das erste Koppelelement 13 umfängt den Träger 5 im unteren Bereich zumindest abschnittsweise.
- Das erste Koppelelement 13 weist Abschnitte auf, die in den oberen Bereich reichen, und die erste Übertragungseinheit 14 ist im oberen Bereich an diesen Abschnitten des ersten Koppelelements 13 befestigt, und im unteren Bereich am Träger 5. Alternativ kann (nicht gezeichnet), die erste Übertragungseinheit 14 im unteren Bereich am ersten Koppelelement 13 befestigt sein und im oberen Bereich am Träger 5. Dann kann auf die genannten Abschnitte der ersten Übertragungseinheit 14 verzichtet werden.
- Das zweite Koppelelement 23 ist im oberen Bereich angeordnet, wobei sich die zweite Aufhängung 21 vom unteren Bereich zum oberen Bereich erstreckt, im unteren Bereich an der Basis 4 befestigt ist und im oberen Bereich am zweiten Koppelelement 23 befestigt ist. Das zweite Koppelelement 23 umfängt den Träger 5 im oberen Bereich zumindest abschnittsweise.
- Das zweite Koppelelement 23 weist Abschnitte auf, die in den unteren Bereich reichen, und die zweite Übertragungseinheit 24 ist im unteren Bereich an diesen Abschnitten des zweiten Koppelelements 23 befestigt, und im oberen Bereich am Träger 5. Alternativ kann (nicht gezeichnet), die zweite Übertragungseinheit 24 im oberen Bereich am zweite Koppelelement 23 befestigt sein und im unteren Bereich am Träger 5. Dann kann auf die genannten Abschnitte der zweiten Übertragungseinheit 24 verzichtet werden.

Die erste Aufhängung 11 ist durch vier Federblätter gebildet, wobei Ebenen, in welchen die Federblätter verlaufen, im wesentlichen parallel zueinander liegen oder koinzidieren. Die zweite Aufhängung 21 ist durch vier Federblätter gebildet, wobei Ebenen, in welchen die Federblätter verlaufen, im wesentlichen parallel zueinander liegen oder koinzidieren. Im Ruhezustand sind Ebenen, in welchen die Federblätter der ersten Aufhängung 11 verlaufen, normal zu Ebenen in welchen die Federblätter der zweiten Aufhängung 21 verlaufen. Dasselbe gilt analog auch für die erste Übertragungseinheit 14 und die zweite Übertragungseinheit 24.

Im der Figur zu dieser Ausführungsform sind die passiven Elemente 122, 222 der beiden Antriebe 12, 22 nicht eingezeichnet Sie erstrecken sich jeweils entlang einer ersten und einer zweiten Seite der Positioniervorrichtung im Wesentlichen in X-respektive Y-Richtung und sind an einem ersten Ende am ersten Koppelelement 13 respektive zweiten Koppelelement 23 befestigt und an einem zweiten, vom ersten entfernten Ende in Kontakt mit dem ersten respektive zweiten aktiven Element 121, 221. Die aktiven Elemente 121, 221 der beiden Antriebe 12. 22 sind an der Basis 4 befestigt.

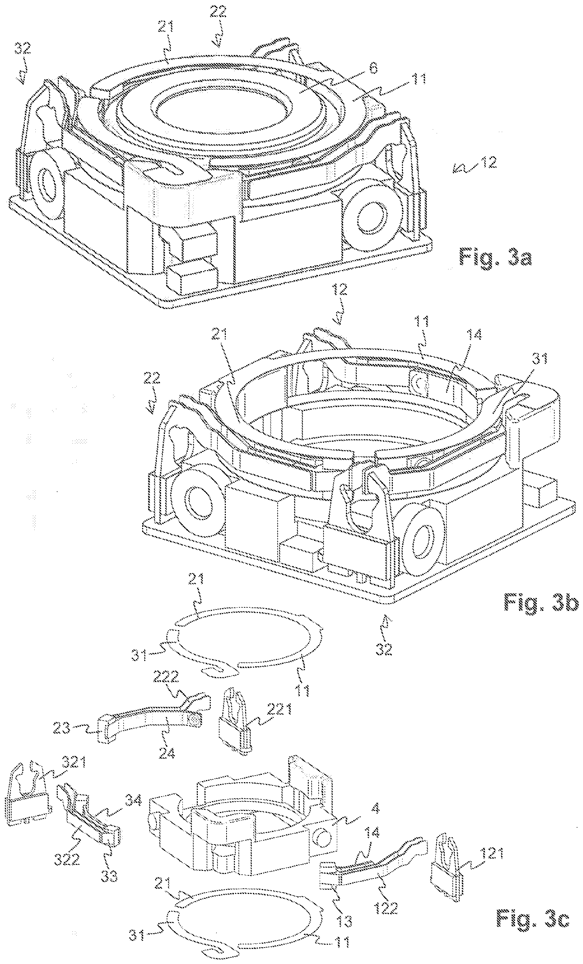

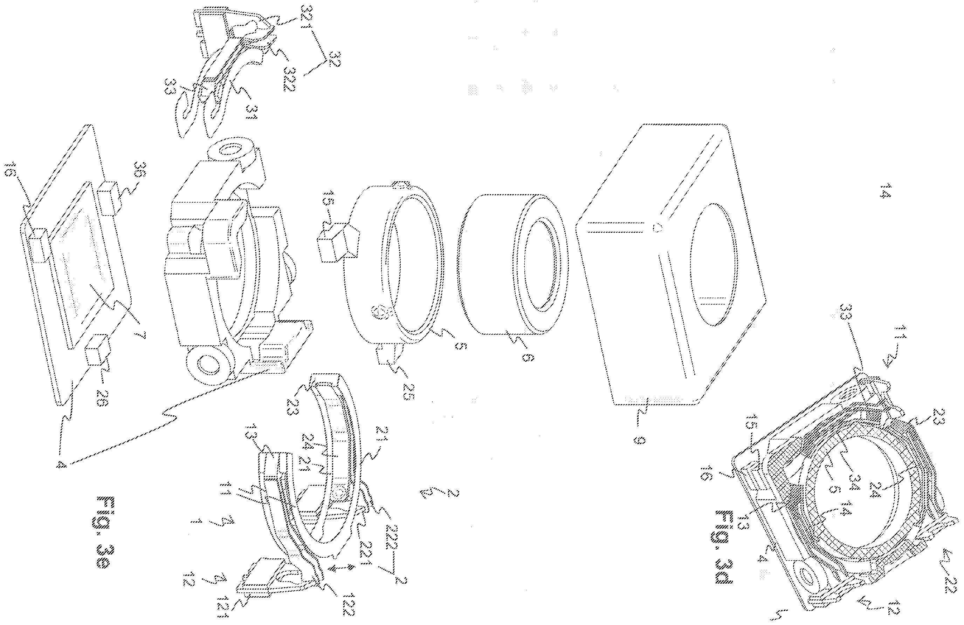

**Figuren 3a-3e** zeigen eine Ausführungsform mit einem um zwei Rotatationsachsen drehbaren und in eine translatorische Richtung beweglichen Träger. Nebst den bereits beschriebenen Elementen liegen hier vor:
An einer Basis 4 ist zusätzlich ein drittes Koppelelement 33 über eine dritte Aufhängung 31 beweglich montiert. Ein dritter Antrieb 32 bewegt das dritte Koppelelement 33 bezüglich der Basis 4.

Die Federblätter der drei Aufhängungen 11, 21, 31 sind jeweils parallel (d.h. mit ihren jeweiligen Ebenen parallel) zueinander angeordnet und bilden so jeweils eine Parallelogrammaufhängung mit genau einem Translations-Freiheitsgrad.

Alle drei Koppelelemente 13, 23. 33 sind parallel zur Z- Achse bewegbar.

Die Bewegung jedes der drei Koppelelemente 13, 23, 33 ist also auf eine Translation in Z-Richtung beschränkt. Der Träger 5 ist an drei Punkten seines Umfangs durch jeweils eine erste, zweite und dritte Übertragungseinheit 14. 24, 34 bezüglich der Z-Richtung im wesentlichen starr an die Bewegung eines der Koppelelemente 13, 23, 33 gekoppelt. Die Übertragungseinheiten 14, 24, 34 lassen zumindest kleine Bewegungen in radialer Richtung, also in der X-Y-Ebene, zu. Sie sind also nachgiebig in dieser Ebene, und starr in der Richtung normal dazu.

Durch die Überlagerung der kinematischen Bindungen des Trägers 5 über die drei Koppelelemente 13. 23, 33 und Obertragungseinheiten 14, 24. 34 ist die Position des Trägers 5 in zwei rotatorischen Dimensionen (Rotation um die X- und Y-Achse) und einer translatorischen Dimension (Z-Richtung) eindeutig bestimmt. Die Orientierung respektive Position in diesen drei Dimension kann durch kombinierte Ansteuerung der drei Antriebe 12, 22, 32 eingestellt werden. Wenn nur zwei Antriebe vorliegen oder nur zwei Antriebe bewegt werden, dann kann damit die Orientierung des Trägers 5 in den genannten zwei rotatorischen Dimensionen eingestellt werden.

Die Federblätter der drei Aufhängungen 11, 21, 31 sind jeweils einem Kreisabschnitt folgend um den Träger 5 herum angeordnet. Der entsprechende Kreis liegt in einer Ebene parallel zur Ebene der Federblätter. Die drei Übertragungsemheiten 14. 24, 34 sind ebenfalls jeweils einem Kreisabschnitt folgend um den Träger 5 herum angeordnet. Sie erlauben eine kleine Bewegung von Kontaktstellen zum Träger 5 in der X-Y-Ebene, zum Ausgleich von Bewegungen, die durch Rotation des Trägers 5 aus der X-Y-Ebene heraus entstehen. Die Kontaktstellen zwischen Übertragungseinheiten 14, 24, 34 und Träger 5 realisieren Kugelgelenke Sie sind beispielsweise durch Kugelkalotten am Träger 5 und korrespondierend geformte Kugelschalen an den Übertragungseinheiten 14, 24, 34 gebildet.

Jeweils ein Federblatt der ersten und ein beispielsweise koplanares Federblatt der zweiten Aufhängung 11, 21 sind aus einem Stück gefertigt, was Herstellung und Montage vereinfacht.

Die passiven Elemente 122. 222, 322 der drei Antriebe 12. 22, 32 erstrecken sich jeweils entlang einer ersten, einer zweiten und einer dritten Seite der Positioniervorrichtung im Wesentlichen in X- respektive Y-Richtung und sind an einem ersten Ende am jeweiligen Koppelelement 13, 23, 33 befestigt und an einem zweiten, vom ersten entfernten Ende in Kontakt mit dem entsprechenden aktiven Element 121, 221. 322. Die aktiven Elemente 121, 221 der beiden Antriebe 12. 22 sind an der Basis 4 befestigt.

**Figur 4** zeigt eine weitere Ausführungsform mit einem um zwei Rotatationsachsen drehbaren und in eine translatorische Richtung beweglichen Träger.

Die kinematischen Verhältnisse sind dieselben wie bei der vorangehenden Ausführungsform Die drei Koppelelemente 13, 23. 33, ihre Antriebe 12, 22 32 und Übertragungseinheiten 14, 24, 34 sind im wesentlichen rotationssymmetrisch um den Träger 5 herum angeordnet. Die Federblätter der drei Aufhängungen 11. 21, 31 folgen jeweils einem Abschnitt eines Kreises um den Träger 5 mit dem Linsenhalter 6. Die drei Aufhängungen 11, 21, 31 weisen jeweils zwei parallel angeordnete Federblätter auf. Die drei Koppelelentente 13, 23, 33 tragen jeweils eine Übertragungseinheit 14, 24, 34, die in derselben Weise wie bei den Figuren 3a-3e ausgebildet und an den Träger 5 gekoppelt sind.

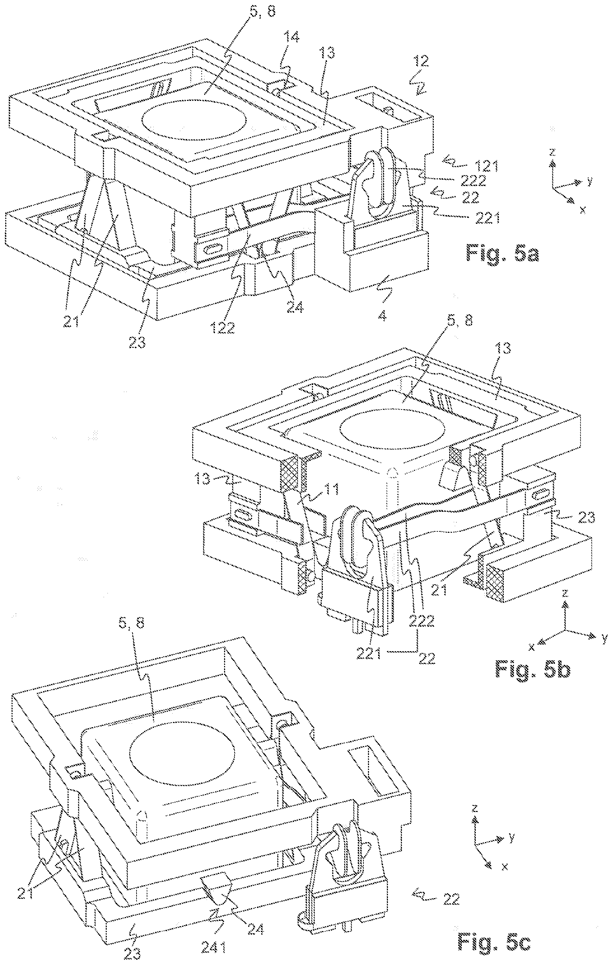

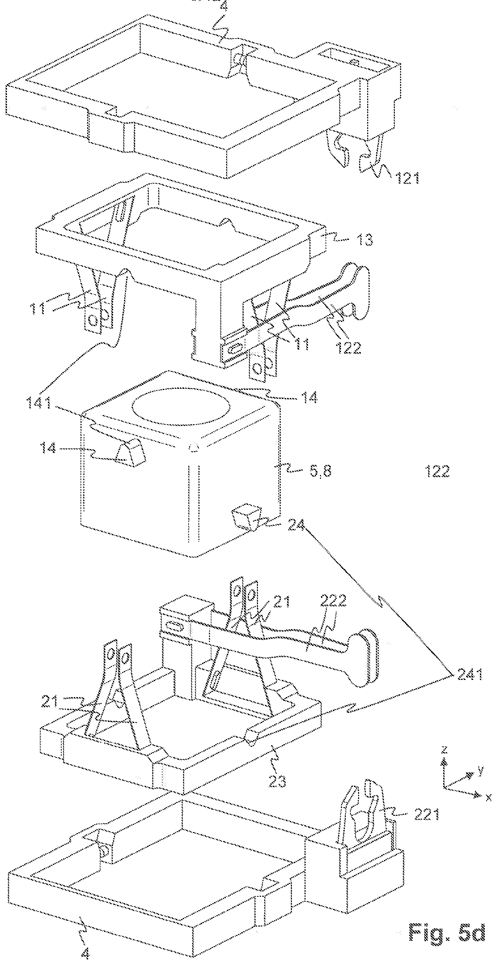

**Figuren 5a-5d** zeigen eine Ausführungsform mit einem um zwei Rotatationsachsen drehbaren Träger. Nebst den bereits beschriebenen Elementen liegen hier vor:
Die Federblätter der zwei Aufhängungen 11, 21 sind jeweils nicht parallel (d.h. mit ihren jeweiligen Ebenen nicht parallel) zueinander angeordnet und bilden so ein Viergelenk mit genau einem Freiheitsgrad. Wenn die Federblätter einer Aufhängung 11, 21 zusammen mit einem der beiden an der Aufhängung beteiligten Körper zumindest annähernd ein Dreieck bilden, so wie in dieser Ausführungsform, dann ist die Relativbewegung der Aufhängung im Wesentlichen eine Rotationsbewegung. Eine Drehachse dieser Rotationsbewegung liegt im Bereich der Ecke des Dreiecks, im welchem sich die beiden Federblätter zumindest annähernd treffen.

Das erste Koppelelement 13 ist um eine erste Achse bezüglich der Basis 4 drehbar, hier beispielhaft die X-Achse eines Koordinatensystems, Das zweite Koppelelement 23 ist um eine zweite Achse bezüglich der Basis 4 drehbar, hier beispielhaft eine Y-Achse. Diese beiden Achsen sind nicht parallel, und typischerweise im wesentlichen orthogonal zueinander.
- Die Bewegung des ersten Koppelelements 13 ist auf eine Rotation um die X-. Achse beschränkt Der Träger 5 ist durch die erste Übertragungseinheit 14 bezüglich dieser Rotation im wesentlichen starr an die Bewegung des ersten Koppelelements 13 gekoppelt, jedoch um die Y-Achse bezüglich des ersten Koppelelements 13 drehbar
- Die Bewegung des zweiten Koppelelements 23 ist auf eine Rotation um die Y-Achse beschränkt. Der Träger 5 ist durch die zweite Übertragungseinheit 24 bezüglich dieser Rotation im wesentlichen starr an die Bewegung des zweiten Koppelelements 23 gekoppelt, jedoch um die X-Achse bezüglich des zweiten Koppelelements 23 drehbar.
Durch die Überlagerung der kinematischen Bindungen des Trägers 5 über die zwei Koppelelemente 13, 23 und Übertragungseinheiten 14, 24 ist die Position des Trägers 5 in zwei rotatorischen Dimensionen eindeutig bestimmt. Die Position in jeder Dimension, also die Rotation bezüglich der X- und der Y-Achse kann im wesentlichen unabhängig über einen der zwei Antriebe 12, 22 eingestellt werden.

Die beiden Übertragungseinheiten 14, 24 sind hier nicht zwingend durch separate Teile gebildet, sondern sind durch Gestaltung der Form des Trägers 5 und der Koppelelemente 13, 23 realisiert. Die erste Übertragungseinheit 14 und der Träger 5 sind korrespondierend zueinander geformt und bilden eine Führung, welche die Drehung um die X-Achse von der ersten Übertragungseinheit 14 an den Träger 5 überträgt, aber eine Drehung des Trägers 5 um die Y-Achse zulässt.
- Beispielsweise liegt dazu ein erstes Drehgelenk 141 zwischen der ersten Übertragungseinheit 14 und dem Träger 5 vor, mit einer Drehachse parallel zur Y-Achse.
- Analog liegt ein zweites Drehgelenk 241 zwischen der zweiten Übertragungseinheit 24 und dem Träger 5 vor, mit einer Drehachse parallel zur X-Achse.

Eine einfache Kinematik wird erreicht,
- wenn die Drehachse der ersten Aufhängung 11 (hier die X-Achse) im wesentlichen mit der Drehachse des zweiten Drehgelenkes 241 koinzidiert oder zumindest parallel zu dieser ist, und/oder
- wenn die Drehachse der zweiten Aufhängung 21 (hier die Y-Achse) im wesentlichen mit der Drehachse des ersten Drehgelenkes 141 koinzidiert oder zumindest parallel zu dieser ist.
Dieses Koinzidieren ist dann exakt oder weist eine minimale Abweichung auf, wenn der Träger 5 bezüglich der Basis 4 im nicht ausgelenkten Zustand respektive der Referenzposition ist.
- Wenn, ausgehend von dieser Referenzposition, beispielsweise der Träger 5 um einen ersten Winkel um die X-Achse gedreht wird, so wird auch die Achse des ersten Drehgelenks 141 bezüglich der Y-Achse um diesen ersten Winkel gedreht
- Umgekehrt gilt also auch, dass wenn der Trager 5 um einen zweiten Winkel um die Y-Achse gedreht wird, auch die Achse des zweiten Drehgelenks 141 bezüglich der X-Achse um diesen zweiten Winkel gedreht wird.

Damit ergibt sich eine schwache gegenseitige Kopplung der Drehbewegungen, die entweder vernachlässigt werden kann oder durch die Steuerung der Antriebe kompensiert werden kann.

Eine Raum sparende Konfiguration ist wie folgt realisiert: die gesamte Positioniervorrichtung erstrecke sich von einem oberen Bereich zu einem unteren Bereich. Bei einem Bildslabilisator liegt beispielsweise ein Bildaufnehmer auf der Basis 4 und im unteren Bereich, und eine verstellbare Optik auf dem Träger 5, mit dem Lichteintritt im oberen Bereich.
- Das erste Koppelelement 13 ist um eine Drehachse im unteren Bereich drehbar, wobei sich die erste Aufhängung 11 vom unteren Bereich zum oberen Bereich erstreckt. Das erste Koppelelement 13 umfängt den Träger 5 im oberen Bereich zumindest abschnittsweise und trägt die erste Übertragungseinheit 14 respektive das erste Drehgelenk 141 im oberen Bereich.
- Das zweite Koppelelement 23 ist um eine Drehachse im oberen Bereich drehbar, wobei sich die zweite Aufhängung 21 vom oberen Bereich zum unteren Bereich erstreckt. Das zweite Koppelelement 23 umfängt den Träger 5 im unteren Bereich zumindest abschnittsweise und trägt die zweite Übertragungseinheit 24 respektive das zweite Drehgelenk 241 im unteren Bereich.
- Die beiden Rotationsachsen für die Drehung (der ersten Aufhängung 11 und des Trägers 5) um die X-Achse befinden sich also um unteren Bereich.
- Die beiden Rotationsachsen für die Drehung (der zweiten Aufhängung 21 und des Trägers 5) um die Y-Achse befinden sich in obern Bereich.
- Das passive Element 122 des ersten Antriebs 12 erstreckt sich zwischen dem unteren und dem oberen Bereich entlang einer ersten Seite der Positioniervorrichtung von einer Befestigungsstelle am ersten Koppelelement 13 zum aktiven Element 121 des ersten Antriebs 12.
- Das passive Element 222 des zweiten Antriebs 22 erstreckt sich zwischen dem unteren und dem oberen Bereich entlang einer zweiten Seite der Positioniervorrichtung, welche von der ersten Seite verschieden ist, von einer Befestigungsstelle am zweiten Koppelelement 23 zum aktiven Element 221 des zweiten Antriebs 22.
Die aktiven Elemente 121, 221 der beiden Antriebe 12, 22 sind an der Basis 4 befestigt.

**Figuren 7a-7c** zeigen jeweils mehrere Federelemente, die als Abschnitte eines einstückigen Teiles ausgebildet sind, insbesondere eines Blechteiles. Die Federelemente sind hier Federblätter. In der Figur 7a ist ein einstückiges Teil gezeigt, welches Teil der Ausführungsform der **Figuren 6a-6d** sein kann. An diesem Teil sind zwei Federblätter der dritten Aufhängung 31 sowie Federelemente der dritten Übertragungseinheit 34 ausgebildet. In der Figur **7b** ist ein einstückiges Teil gezeigt, welches Teil der Ausführungsform der **Figuren 1a-1h** oder **6a-6d** sein kann. An diesem Teil sind drei Federblätter der ersten Aufhängung 11 sowie drei Federblätter der zweiten Aufhängung 21 ausgebildet. In der **Figur 7c** ist ein einstückiges Teil gezeigt, welches Teil der Ausführungsform der **Figuren 8a-8e** sein kann. An diesem Teil sind zwei Federblätter der ersten Aufhängung 11 sowie vier Federblätter der zweiten Aufhängung 21 ausgebildet.
In der **Figur 9** ist ein einstückiges Teil gezeigt, welches Teil der Ausführungsform der **Figuren 8a-8e** sein kann. An diesem Teil sind zwei Federelemente 34a, 34b der dritten Übertragungseinheit 34 ausgebildet.

## Patentansprüche

1. Positioniervorrichtung für einen Bildstabilisator zur kontrollierten Bewegung eines **Trägers** (5) bezüglich einer **Basis** (4), aufweisend
ein **erstes Koppelelement** (13), welches mit einer **ersten Aufhängung** (11) bezüglich der Basis (4) beweglich montiert ist und mit einem **ersten Antrieb** (12) bewegbar ist,
ein **zweites Koppelelement** (23), welches mit einer **zweiten Aufhängung** (21) bezüglich der Basis (4) beweglich montiert ist und mit einem **zweiten Antrieb** (22) bewegbar ist,
eine **erste Übertragungseinheit** (14), mit welcher eine Bewegung des ersten Koppelelements (13) an den Träger (5) übertragbar ist,
eine **zweite Übertragungseinheit** (24), mit welcher eine Bewegung des zweiten Koppelelements (23) an den Träger (5) übertragbar ist,
wobei der erste Antrieb (12) und der zweite Antrieb (22) **Linearantriebe** sind und das erste Koppelelement (13) und das zweite Koppelelement (23) jeweils
eine Bewegbarkeit mit im wesentlichen **genau einem translatorischen Freiheitsgrad** aufweisen.

2. Positioniervorrichtung gemäss einem der vorangehenden Ansprüche, wobei mindestens die Aufhängung (11) und/oder die Aufhängung (21) mindestens die erste Aufhängung (11) und/oder die zweite Aufhängung (21) durch eine Aufhängun mit mindestens zwei flachen **Federelement** realisiert sind, welche Koppelelement mit der Basis (4) verbinden.

3. Positioniervorrichtung der vorangehenden Ansprüche, wobei mindestens der erste Antrieb (12) und der zweite Antrieb (22) **piezoelektrische Linear-Antriebe** sind, insbesondere solche, bei welchen ein flacher Resonator (123) sich stimmgabelartig mit zwei Amen parallel zu einer Ebene eines aktiven Elements (121) erstreckt, der Resonator (123) durch ein elektrisch gespeistes Piezoelement (124) in Schwingung versetzbar ist, wobei Kontaktbereiche des Resonators (123) durch eine oszillierende Bewegung ein passives Element (122) des Antriebs (12)bezüglich des aktiven Elements (121)antreiben.

4. Positioniervorrichtung gemäss einem der vorangehenden Ansprüche, wobei
die erste **Aufhängung** (11) eine **Parallelverschiebung** des ersten Koppelelements (13) bezüglich der Basis (4) erlaubt, und
die zweite Aufhängung (21) eine Parallelverschiebung des zweiten Koppelelements (23) bezüglich der Basis (4) erlaubt.

5. Positioniervorrichtung gemäss einem der vorangehenden Ansprüche, wobei
die erste **Übertragungseinheit** (14) eine **Parallelverschiebung** des Trägers (5) bezüglich des ersten Koppelelements (13) erlaubt, und
die zweite Übertragungseinheit (24)eine Parallelverschiebung des Trägers (5) bezüglich des zweiten Koppeielements (23) erlaubt.

6. Positiomervorrichtung gemäss einem der Ansprüch 4 oder wobei eine oder mehrere der Parallelverschiebungen jeweils mit einer Parallelogrammanfhängung realisiert sind.

7. Positioniervorrichtung gemäss Anspruch 6, wobei mindestens die erste Aufhängung (11) und/oder die zweite Aufhängung (21) durch eine **Parallelogrammaufhängung** mit mindestens zwei flachen **Federelementen** realisiert sind, welche **parallele zueinander** angeordent sind und das jeweilige Koppelelment mit der Basis (4) verbinden.

8. Positioniervorrichtung gemäss Anspruch 6 oder 7, wobei
die Parallelverschiebung des ersten **Koppelelements** (13) bezüglich der Basis (4) genau **einen** Translations-Freiheitsgrad aufweist, und die Parallelverschiebung des zweiten **Koppelelements** (23) bezüglich der Basis (4) genau **einen** Translations-Freiheitsgrad aufweist.

9. Positioniervorrichtung gemäss einem der Ansprüche 5 bis 8, wobei
die Parallelverschiebung des **Trägers** (5) bezüglich des ersten Koppelelements (13) genau zwei Translations-Freiheitsgrade aufweist, und
die Parallelverschiebung des **Trägers** (5) bezüglich des zweiten Koppelelements genau zwei Translations-Freiheitsgrade aufweist,

10. Positioniervorrichtung gemäss einem der Ansprüche 5 bis 8, wobei
die Parallelverschiebung des **Trägers** (5) bezüglich des ersten Koppelelements (13) genau **einen** Translations-Freiheitsgrad aufweist, und
die Parallelverschiebung des **Trägers** (5) bezüglich des zweiten Koppelelements (23) **einen** Translations-Freiheitsgrad aufweist.

11. Positioniervorrichtung gemäss einem der vorangehenden Ansprüche, aufweisend
ein **drittes Koppelelement** (33), welches mit einer **dritten Aufhängung** (31) bezüglich des ersten Koppelelements (13) beweglich montiert ist und mit einem **dritten Antrieb** (32) bewegbar ist,
eine **dritte Übertragungseinheit** (34), mit welcher eine Bewegung des dritten Koppelelements (33) an den Träger (5) übertragbar ist.

12. Positioniervorrichtung gemäss einem 1 bis 11, wobei, wenn der Träger (5) oberhalb der Basis (4) an angeordnet ist, das erste Koppelelement (13) und das zweite Koppelelement (23) seitlich des Trägers (5) angeordnet sind.

13. Positioniervorrichtung gemäss einem der Ansprüche 1 bis 11, wobei, wenn der Träger (5) oberhalb der Basis (4) angeordnet ist, das erste Koppelelement (13) den Träger (5) zumindest abschnittsweise umfängt und in einem unteren Bereich des Trägers (5) angeordnet ist und das zweite Koppelelement (23) den Träger (5) zumindest abschnittsweise umfängt und in einem oberenBereich des Trägers (5) angeordnet ist.

14. Positioniervorrichtung gemäss einem der Ansprüche 1 bis 12, aufweisend
ein **drittes Koppelelement** (33), welches mit einer **dritten Aufhängung** (31) bezüglich der Basis (4) beweglich montiert ist und mit einem **dritten Antrieb** (32) bewegbar ist,
eine **dritte Übertragungseinheit** (34), mit welcher eine Bewegung des dritten Koppelelements (33) an den Träger (5) übertragbar ist,
wobei jede der drei Übertragungseinheiten (14, 24, 34) an einer anderen Kontaktstelle an einem Umfang des Trägers (5) angreift und alle drei Übertragungseinheiten (14, 24, 34) eine im wesentlichen translatorische Bewegung der entsprechenden Kontaktstelle bewirken.

15. Positioniervorrichtung gemäss einem der Ansprüche 1 bis 3, wobei
die erste **Aufhängung** (11) eine **Rotation** des Koppelelements (13) bezüglich der Basis (4) erlaubt, und

16. Positioniervorrichtung gemäss Anspruch 15, wobei
die erste **Übertragungseinheit** (14) eine **Rotation** des Trägers (5) bezüglich ersten Koppelelements (13) erlaubt, und
die zweite Übertragungseinheit (24) eine **Rotation** des Trägers (5) bezüglich des zweiten Koppelelements (23) erlaubt.

17. Positioniervorrichtung gemäss Anspruch 15 oder 16, wobei in einer Referenzposition des Trägers
eine Drehachse der ersten Aufhängung (11) parallel zu einer Drehachse der zweiten Übertragungseinheit (24) verläuft oder mit dieser koinzidiert, und
eine Drehachse der zweiten Aufhängung (21) parallel zu einer Drehachse der ersten Übertragungseinheit (14) verläuft oder mit koinzidiert.

## Claims

1. A positioning device for a picture stabiliser for the controlled movement of a carrier (5) with respect to a base (4), comprising
a first coupling element (13) which by way of a first suspension (11) is assembled in a movable manner with respect to the base (4) and is movable by a first drive (12),
a second coupling element (23) which by way of a second suspension (21) is assembled in a movable manner with respect to the base (4) and is movable by a second drive (22),
a first transmission unit (14), with which a movement of the first coupling element (13) can be transmitted onto the carrier (5),
a second transmission unit (24), with which a movement of the second coupling element (23) can be transmitted onto the carrier (5),
wherein the first drive (12) and the second drive (22) are linear drives and the first coupling element (13) and the second coupling element (23) in each case have a movability with essentially exactly one translatory degree of freedom.

2. A positioning device according to one of the preceding claims, wherein at least the first suspension (11) and/or the second suspension (21) are realised by a suspension with at least two flat spring elements which connect the respective coupling element to the base (4).

3. A positioning device according to one of the preceding claims, wherein at least the first drive (12) and the second drive (22) are piezoelectric linear drives, in particular such with which a flat resonator (123) extends in the manner of a tuning fork with two arms parallel to a plane of an active element (121), the resonator (123) can be set into oscillation by an electrically supplied piezoelement (124), wherein contact regions of the resonator (123), by way of an oscillating movement drive a passive element (122) of the drive (12) with respect to the active element (121).

4. A positioning device according to one of the preceding claims, wherein the first suspension (11) permits a parallel displacement of the first coupling element (13) with respect to the base (4), and the second suspension (21) permits a parallel displacement of the second coupling element (23) with respect to the base (4).

5. A positioning device according to one of the preceding claims, wherein the first transmission unit (14) permits a parallel displacement of the carrier (5) with respect to the first coupling element (13), and
the second transmission unit (24) permits a parallel displacement of the carrier (5) with respect to the second coupling element (23).

6. A positioning device according to one of the claims 4 or 5, wherein one or more of the parallel displacements are realised in each case with a parallelogram suspension.

7. A positioning device according to claim 6, wherein at least the first suspension (11) and/or the second suspension (21) are realised by a parallelogram suspension with at least two flat spring elements which are arranged parallel to one another and connect the respective coupling element to the base (4).

8. A positioning device according to claim 6 or 7, wherein
the parallel displacement of the first coupling element (13) with respect to the base (4) has exactly one translation degree of freedom, and
the parallel displacement of the second coupling element (23) with respect to the base (4) has exactly one translation degree of freedom.

9. A positioning device according to one of the claims 5 to 8, wherein
the parallel displacement of the carrier (5) with respect to the first coupling element (13) has exactly two translation degrees of freedom, and
the parallel displacement of the carrier (5) with respect to the second coupling element has exactly two translation degrees of freedom.

10. A positioning device according to one of the claims 5 to 8, wherein
the parallel displacement of the carrier (5) with respect to the first coupling element (13) has exactly one translation degree of freedom, and
the parallel displacement of the carrier (5) with respect to the second coupling element (23) has exactly one translation degree of freedom.

11. A positioning device according to one of the preceding claims, comprising a third coupling element (33) which by way of a third suspension (31) is assembled in a movable manner with respect to the first coupling element (13) and is movable by a third drive (32),
a third transmission unit (34), with which a movement of the third coupling element (33) can be transmitted onto the carrier (5).

12. A positioning device according to one of the claims 1 to 11, wherein, if the carrier (5) is arranged above the base (4), the first coupling element (13) and the second coupling element (23) are arranged laterally of the carrier (5).

13. A positioning device according to one of the claims 1 to 11, wherein, if the carrier (5) is arranged above the base (4), the first coupling element (13) at least in sections embraces the carrier (5) and is arranged in a lower region of the carrier (5), and the second coupling element (23) at least in sections embraces the carrier (5) and is arranged in an upper region of the carrier (5).

14. A positioning device according to one of the claims 1 to 12, comprising
a third coupling element (33) which by way of a third suspension (31) is assembled in a movable manner with respect to the base (4) and is movable by a third drive (32),
a third transmission unit (34), with which a movement of the third coupling element (33) can be transmitted onto the carrier (5),
wherein each of the three transmission units (14, 24, 34) engages on a different contact location on a periphery of the carrier (5), and all three transmission units (14, 24, 34) effect an essentially translatory movement of the respective contact location.

15. A positioning device according to one of the claims 1 to 3, wherein
the first suspension (11) permits a rotation of the first coupling element (13) with respect to the base (4), and
the second suspension (21) permits a rotation of the second coupling element (23) with respect to the base (4).

16. A positioning device according to claim 15, wherein
the first transmission unit (14) permits a rotation of the carrier (5) with respect to the first coupling element (13), and
the second transmission unit (24) permits a rotation of the carrier (5) with respect to the second coupling element (23).

17. A positioning device according to claim 15 or 16, wherein in a reference position of the carrier
a rotation axis of the first suspension (11) runs parallel to a rotation axis of the second transmission unit (24) or coincides with this, and
a rotation axis of the second suspension (21) runs parallel to a rotation axis of the first transmission unit (14) and coincides with this.

## Revendications

1. Ensemble de positionnement de stabilisateur d'image en vue du déplacement contrôlé d'un support (5) par rapport à une base (4), l'ensemble présentant
un premier élément d'accouplement (13) monté à déplacement par rapport à la base (4) par une première suspension (11) et apte à être déplacé par un premier entraînement (12),
un deuxième élément d'accouplement (23) monté à déplacement par rapport à la base (4) par une deuxième suspension (21) et apte à être déplacé par un deuxième entraînement (22),
une première unité de transmission (14) par laquelle un déplacement du premier élément d'accouplement (13) peut être transmis au support (5),
une deuxième unité de transmission (24) par laquelle un déplacement du deuxième élément d'accouplement (23) peut être transmis au support (5),
le premier entraînement (12) et le deuxième entraînement (22) étant des entraînements linéaires, le premier élément d'accouplement (13) et le deuxième élément d'accouplement (23) présentant une mobilité dotée d'exactement un degré de liberté en translation.

2. Ensemble de positionnement selon la revendication précédente, dans lequel au moins la première suspension (11) et/ou la deuxième suspension (21) sont réalisées sous la forme de suspensions présentant au moins deux éléments élastiques plats qui relient l'élément d'accouplement concerné à la base (4).

3. Ensemble de positionnement selon l'une des revendications précédentes, dans lequel au moins le premier entraînement (12) et le deuxième entraînement (22) sont des entraînements piézoélectriques linéaires et en particulier des entraînements dans lesquels un résonateur plat (123) s'étend à la manière des deux bras d'un diapason parallèlement à un plan d'un élément actif (121), le résonateur (123) pouvant être mis en vibration par un piézo-élément (124) alimenté électriquement, des parties de contact du résonateur (123) entraînant par un déplacement oscillant un élément passif (122) de l'entraînement (12) par rapport à l'élément actif (121).

4. Ensemble de positionnement selon l'une des revendications précédentes, dans lequel la première suspension (11) permet un coulissement parallèle du premier élément d'accouplement (13) par rapport à la base (4) et la deuxième suspension (21) un coulissement parallèle du deuxième élément d'accouplement (23) par rapport à la base (4).

5. Ensemble de positionnement selon l'une des revendications précédentes, dans lequel la première unité de transmission (14) permet un coulissement parallèle du support (5) par rapport au premier élément d'accouplement (13) et la deuxième unité de transmission (24) permet un déplacement parallèle du support (5) par rapport au deuxième élément d'accouplement (23).

6. Ensemble de positionnement selon l'une des revendications 4 ou 5, dans lequel un ou plusieurs des coulissements parallèles sont réalisés à l'aide d'une suspension à parallélogramme respective.

7. Ensemble de positionnement selon la revendication 6, dans lequel au moins la première suspension (11) et/ou la deuxième suspension (21) sont réalisées comme suspension à parallélogramme présentant au moins deux éléments élastiques plats disposés parallèlement l'un à l'autre et reliant l'élément d'accouplement concerné à la base (4).

8. Ensemble de positionnement selon les revendications 6 ou 7, dans lequel le déplacement parallèle du premier élément d'accouplement (13) par rapport à la base (4) présente exactement un degré de liberté en translation et
le déplacement parallèle du deuxième élément d'accouplement (23) par rapport à la base (4) présente exactement un degré de liberté en translation.

9. Ensemble de positionnement selon l'une des revendications 5 à 8, dans lequel le déplacement parallèle du support (5) par rapport au premier élément d'accouplement (13) présente exactement deux degrés de liberté en translation et le déplacement parallèle du support (5) par rapport au deuxième élément d'accouplement présente exactement deux degrés de liberté en translation.

10. Ensemble de positionnement selon la revendication 9, dans lequel le déplacement parallèle du support (5) par rapport au premier élément d'accouplement (13) présente exactement un degré de liberté en translation et le déplacement parallèle du support (5) par rapport au deuxième élément d'accouplement (23) présente exactement un degré de liberté en translation.

11. Ensemble de positionnement selon l'une des revendications précédentes, présentant un troisième élément d'accouplement (33) monté à déplacement par une troisième suspension (31) par rapport au premier élément d'accouplement (13) et apte à être déplacé par un troisième entraînement (32) et une troisième unité de transmission (34) qui permet de transmettre un déplacement du troisième élément d'accouplement (33) au support (5).

12. Ensemble de positionnement selon l'une des revendications 1 à 11, dans lequel lorsque le support (5) est disposé au-dessus de la base (4), le premier élément d'accouplement (13) et le deuxième élément d'accouplement (23) sont disposés sur les côtés du support (5).

13. Ensemble de positionnement selon les revendications 6 ou 7, dans lequel lorsque le support (5) est disposé au-dessus de la base (4), le premier élément d'accouplement (13) entoure au moins par partie le support (5) et est disposé dans une partie inférieure du support (5), le deuxième élément d'accouplement (23) entourant au moins par partie le support (5) et étant disposé dans une partie inférieure du support (5).

14. Ensemble de positionnement selon l'une des revendications 1 à 12, présentant un troisième élément d'accouplement (33) monté à déplacement par rapport à la base (4) par une troisième suspension (31) et apte à être déplacé par un troisième entraînement (32) et une troisième unité de transmission (34) qui permet de transmettre un déplacement du troisième élément d'accouplement (33) au support (5),
chacune des trois unités de transmission (14, 24, 34) engageant la périphérie du support (5) en un autre emplacement de contact et les trois unités de transmission (14, 24, 34) ont pour effet un déplacement essentiellement en translation de l'emplacement de contact correspondant.

15. Ensemble de positionnement selon l'une des revendications 1 à 3, dans lequel la première suspension (11) permet une rotation du premier élément d'accouplement (13) par rapport à la base (4) et
la deuxième suspension (21) permet une rotation du deuxième élément d'accouplement (23) par rapport à la base (4).

16. Ensemble de positionnement selon la revendication 15, dans lequel la première unité de transmission (14) permet une rotation du support (5) par rapport au premier élément d'accouplement (13) et la deuxième unité de transmission (24) permet une rotation du support (5) par rapport au deuxième élément d'accouplement (23).

17. Ensemble de positionnement selon les revendications 15 ou 16, dans lequel, dans une position de référence du support, un axe de rotation de la première suspension (11) s'étend parallèlement à l'axe de rotation de la deuxième unité de transmission (24) ou coïncide avec ce dernier et l'axe de rotation de la deuxième suspension (21) s'étend parallèlement à l'axe de rotation de la première unité de transmission (14) ou coïncide avec ce dernier.
